# FASCICULE DE BREVET EUROPEEN

(11) **EP 3 662 575 B1**
(45) Date de publication et mention de la délivrance du brevet: **29.11.2023**
(21) Numéro de dépôt: 18743831.2
(22) Date de dépôt: 30.07.2018
(51) Int. Cl.: H02S 20/30

(54) **PROCEDE DE TEST DE COMPATIBILITE**
VERFAHREN ZUR PRÜFUNG DER KOMPATIBILITÄT
METHOD FOR TESTING COMPATIBILITY

(30) Priorité: 31.07.2017 FR 1757335
(43) Date de publication de la demande: 10.06.2020
(73) Titulaire: Somfy Activites SA, 74300 Cluses (FR)
(72) Inventeur: ROUSSEAU, Fabien, 74440 Mieussy (FR); SAINT-DRENAN, Yves-Marie, 06250 Mougins (FR)
(74) Mandataire: Novaimo
(86) Numéro de dépôt international: PCT/EP2018/070638
(87) Numéro de publication internationale: WO 2019/025389

(56) Documents cités:
- EP-A2- 2 199 528
- FR-A1- 2 966 942
- FR-A1- 3 016 002
- Anonymous: "Shadow analysis - Architetto Paolo Renieri", , 14 août 2016 (2016-08-14), XP055469047, Extrait de l'Internet: URL:https://web.archive.org/web/2016081410 4605/https://www.renieriarchitetto.com/riq ualificazione-energetica/en/services/build ings-physics/shadow-analysis.html [extrait le 2018-04-20]

## Description

La présente invention concerne le domaine des dispositifs domotiques électriquement autonomes mus par énergie solaire. La présente invention concerne plus particulièrement un procédé de test de compatibilité entre les besoins énergétiques d'un dispositif domotique électriquement autonome comprenant au moins un module photovoltaïque et un emplacement prédéterminé pour le module photovoltaïque.

Il est connu des dispositifs domotiques électriquement autonomes alimentés en énergie électrique par l'énergie solaire, comme des volets roulants, des protections solaires, des volets battants, des portails, etc. Un avantage de ces dispositifs est qu'ils ne nécessitent aucun branchement à un réseau électrique. Cette solution peut être intéressante, par exemple, dans le cadre de rénovation, car l'installation de ces dispositifs ne nécessite pas de tirer de nouvelles lignes électriques du compteur électrique aux emplacements choisis pour installer ces dispositifs.

Un procédé ayant pour but d'adapter le fonctionnement d'un volet roulant comprenant un panneau photovoltaïque et une batterie, en fonction de l'ensoleillement mesuré, est connu du document FR2966942.

Cependant, le lieu où est installé le dispositif domotique électriquement autonome est rarement situé sur un terrain totalement dégagé de tout obstacle, comme des immeubles ou de la végétation. De ce fait, au cours de la journée, suivant la date dans l'année et/ou l'heure du jour, des ombres peuvent venir se projeter sur le module photovoltaïque du dispositif domotique et ainsi réduire, voire stopper, sa production d'énergie électrique. Ceci est une des raisons pour laquelle certains utilisateurs manquent de confiance dans la fiabilité de ces dispositifs domotiques électriquement autonomes. Ils hésitent à choisir un actionneur alimenté électriquement par de l'énergie solaire de peur que l'emplacement choisi pour l'installation du module photovoltaïque ne reçoive pas un ensoleillement suffisant pour garantir un bon fonctionnement du dispositif tout au long de l'année.

Dans ce contexte, il est intéressant de proposer une solution permettant de valider si le rayonnement solaire effectivement reçu en un endroit prédéterminé permettrait, à un module photovoltaïque installé à cet emplacement, de fournir une alimentation électrique suffisante au dispositif domotique électriquement autonome pour fonctionner correctement tout au long de l'année.

Un but de l'invention est, notamment, de corriger tout ou partie des inconvénients précités en proposant une solution permettant de tester de façon automatique si un dispositif domotique électriquement autonome équipé d'un module photovoltaïque est susceptible de fonctionner correctement en un emplacement prédéterminé.

A cet effet, l'invention a pour objet un procédé de test de compatibilité entre les besoins énergétiques d'un dispositif domotique électriquement autonome et un emplacement prédéterminé pour un module photovoltaïque, le dispositif domotique électriquement autonome comprenant le module photovoltaïque, un dispositif de fermeture, d'occultation, de protection solaire ou d'écran et un élément de stockage d'énergie électrique configuré pour alimenter le dispositif de fermeture, d'occultation, de protection solaire ou d'écran, l'élément de stockage d'énergie électrique étant connecté au module photovoltaïque et destiné à être chargé à partir de l'énergie électrique générée par le module photovoltaïque, le procédé comprenant au moins :
- une étape de sélection du dispositif domotique électriquement autonome et d'enregistrement, dans une mémoire, d'une donnée identifiant le dispositif domotique électriquement autonome,
- une étape de renseignement, par acquisition ou par saisie, et d'enregistrement, dans une mémoire, de signaux représentatifs de données de position relatives à l'emplacement prédéterminé, les données de position comprenant au moins des données de localisation et de l'orientation de l'emplacement prédéterminé,
- Une étape d'estimation et d'enregistrement, dans une mémoire, de données d'un diagramme solaire au niveau de l'emplacement prédéterminé,
- une étape de calcul d'une estimation de l'évolution de l'amplitude du rayonnement solaire reçu à l'emplacement prédéterminé au cours d'une année en tenant compte de la position de l'emplacement prédéterminé et du masque d'ombrage,
- une étape de calcul d'un bilan énergétique à partir de l'évolution de l'amplitude du rayonnement solaire reçu à l'emplacement prédéterminé et des besoins énergétiques du dispositif domotique électriquement autonome sélectionné.

Suivant un mode de mise en oeuvre, le procédé comprend une étape d'estimation d'un indice de confiance représentatif de la compatibilité entre les besoins énergétiques du dispositif domotique électriquement autonome sélectionné lors de l'étape de sélection et les apports énergétiques du module photovoltaïque.

Suivant un mode de mise en oeuvre, le procédé comprend une étape de définition et d'enregistrement, dans une mémoire, des données d'un masque d'ombrage représentatif d'éléments susceptibles de projeter une ombre sur l'emplacement prédéterminé.

Suivant un mode de mise en oeuvre, le masque d'ombrage est défini, notamment de façon automatique, à partir d'une ou plusieurs photographies prise au niveau de l'emplacement prédéterminé et/ou à partir d'un film tourné au niveau de l'emplacement prédéterminé.

Le procédé peut être mis en oeuvre au moyen d'un terminal mobile.

Suivant un mode de mis en oeuvre, l'étape de définition et d'enregistrement comprend une sous-étape d'optimisation d'une valeur d'angle de prise de vue par rapport à la normale à la surface sensible du module photovoltaïque disposé à l'emplacement prédéterminé.

Suivant un mode de mis en oeuvre, l'optimisation de la valeur de l'angle de prise de vue est effectuée en considérant trois critères, un premier critère dépendant de l'angle d'incidence du soleil, un deuxième critère dépendant de la réponse du module photovoltaïque et un troisième critère dépendant de la durée d'ensoleillement au niveau de la position prédéterminée.

Suivant un mode de mise en oeuvre, le procédé comprend une étape d'affichage d'informations complémentaires relatives au dispositif domotique électriquement autonome sélectionné, lors de l'étape de sélection.

Suivant un mode de mise en oeuvre, l'étape de calcul de l'estimation de l'évolution de l'amplitude du rayonnement solaire comprend :
- une sous-étape d'estimation de données moyennes d'ensoleillement au niveau de l'emplacement prédéterminé et,
- une sous-étape de superposition des données moyennes d'ensoleillement avec celles du masque d'ombrage.

Suivant un mode de mise en oeuvre, l'étape d'estimation de l'indice de confiance comprend une sous-étape de calcul du nombre de cycles de fonctionnement quotidien du dispositif domotique électriquement autonome sélectionné, lors de l'étape de sélection, le nombre de cycles de fonctionnement quotidien étant par exemple moyenné sur une année.

Suivant un mode de mise en oeuvre, le nombre de cycles de fonctionnement quotidien du dispositif domotique électriquement autonome est calculé de façon itérative.

Suivant un mode de mise en oeuvre, l'étape de calcul du bilan énergétique comprend une sous-étape de calcul d'une balance énergétique ou d'un bilan énergétique sur une année complète.

Suivant un mode de mise en oeuvre, l'estimation de l'indice de confiance comprend le calcul d'un nombre de cycles de fonctionnement successifs que peut effectuer le dispositif domotique électriquement autonome lorsque la valeur de la charge de l'élément de stockage d'énergie est égale à une valeur seuil au cours d'une année. La valeur seuil peut être la plus faible valeur de la charge de l'élément de stockage d'énergie au cours d'une année.

Suivant un mode de mise en oeuvre, l'estimation de l'indice de confiance comprend le calcul du nombre de scénarios d'utilisation journalier typique que peut effectuer le dispositif domotique électriquement autonome lorsque la valeur de la charge de l'élément de stockage d'énergie électrique est égale à une valeur seuil au cours d'une année. La valeur seuil peut être la plus faible valeur de la charge de l'élément de stockage d'énergie au cours d'une année.

L'invention porte aussi sur un dispositif de test de compatibilité, notamment un terminal mobile de test de compatibilité, un terminal fixe de test de compatibilité ou un serveur de test de compatibilité, comprenant les éléments matériels et logiciels mettant en oeuvre le procédé défini précédemment.

L'invention porte encore sur un programme d'ordinateur téléchargeable depuis un réseau de communication et/ou enregistré sur un support de données lisible par un ordinateur et exécutable par un ordinateur, caractérisé en ce qu'il comprend des instructions de code de programme informatique de mise en oeuvre du procédé défini précédemment, lorsque le programme est exécuté par un ordinateur.

D'autres particularités et avantages de la présente invention apparaîtront plus clairement à la lecture de la description ci-après, donnée à titre illustratif et non limitatif, et faite en référence aux figures annexées, sur lesquels :
- la figure 1 représente un exemple de configuration dans lequel le procédé de test de compatibilité est mis en oeuvre au moyen d'un terminal mobile ;
- la figure 2 représente des étapes du procédé selon un exemple de mode de mise en oeuvre de l'invention ;
- la figure 3 représente un exemple de représentation graphique d'un diagramme solaire centré sur le sud ;
- les figures 4 et 5 représentent le diagramme solaire de la figure 3 sur lequel a été superposé un masque d'ombrage ;
- la figure 6 représente des sous-étapes de l'étape de définition et d'enregistrement d'un masque d'ombrage selon un exemple de mode de mise en oeuvre de l'invention ;
- les figures 7 à 9 sont la superposition des représentations graphiques du diagramme solaire au niveau de l'emplacement prédéterminé, du masque d'ombrage et respectivement du premier critère, du deuxième critère et du troisième critère en fonction de la position du soleil dans le ciel.
- les figures 10 et 11 sont la superposition des représentations graphiques du diagramme solaire au niveau de l'emplacement prédéterminé, du masque d'ombrage et du produit des trois critères.
- la figure 12 est une illustration de résultats obtenus après application de la sous-étape d'optimisation.

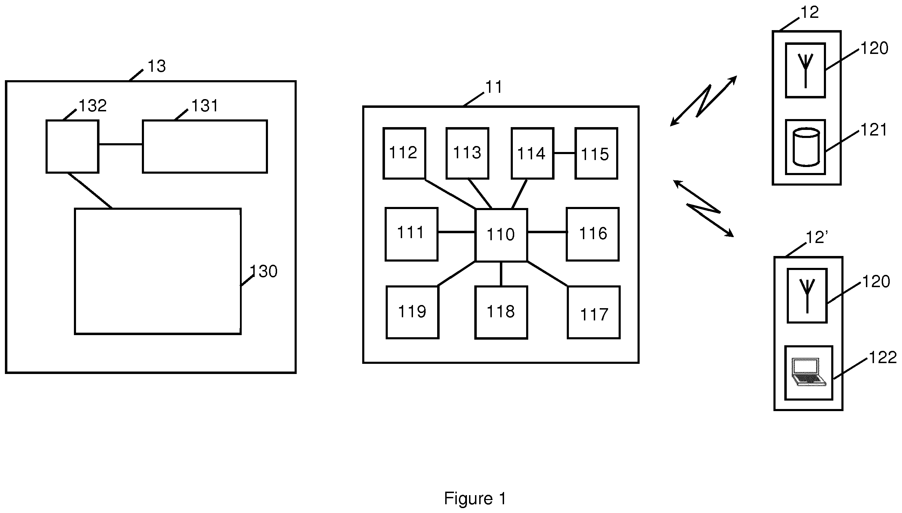

La figure 1 présente un exemple de configuration comprenant un terminal mobile 11, un serveur distant 12, 12' et un dispositif domotique électriquement autonome 13, nullement limitatif, dans lequel un mode de mise en oeuvre du procédé de test de compatibilité, selon l'invention, est mis en oeuvre au moyen du terminal mobile 11.

Il convient de noter que l'utilisation du terme «terminal mobile» désigne tout type d'appareil mobile susceptible d'être utilisé pour mettre en oeuvre le procédé de test selon l'invention comme un ordinateur portable, une tablette, un appareil de téléphonie mobile intelligent, etc. Cependant, dans la description suivante, le terme «terminal mobile» renvoie, préférentiellement, à un appareil de téléphonie mobile intelligent (ou «*smaitphone*» selon la terminologie anglo-saxonne) ou une tablette tactile. Plus généralement, le mode de mise en oeuvre du procédé de test de compatibilité peut être mis en oeuvre par tout ordinateur. Le procédé de test peut par exemple être mis en oeuvre sur un serveur distant auquel un terminal se connecte pour permettre la saisie de paramètres nécessaires au procédé de test et pour obtenir les résultats du procédé de test.

De façon préférentielle mais non obligatoire, un tel terminal mobile 11 comprend un dispositif de positionnement par satellites 111, un dispositif d'orientation 112, comme un magnétomètre ou tout autre capteur configuré pour délivrer un signal électrique représentatif de l'orientation du terminal mobile 11, et un accéléromètre 113 ou tout autre capteur configuré pour délivrer un signal électrique représentatif de l'inclinaison du terminal mobile 11.

Le terminal mobile 11 peut comprendre un module de communication 114 configuré pour dialoguer, par exemple, avec au moins un serveur distant 12, 12' selon un protocole de communication. Le module de communication 114 peut être connecté à des moyens de communication 115 intégrés ou non au terminal mobile 11.

De façon non limitative, le terminal mobile 11 peut comprendre au moins un module d'affichage 116, au moins un module de traitement d'image 117, au moins un module de calcul 118 et au moins une mémoire 119.

Ces différents modules 114, 116, 117, 118, du terminal mobile 11, peuvent être un ou plusieurs microcontrôleurs, microprocesseurs, processeurs, ordinateurs ou tous autres moyens équivalents programmés de façon opportune.

Le terminal mobile 11 peut comprendre au moins une unité de traitement 110 comprenant au moins un processeur et au moins une zone mémoire.

Par la suite les différentes zones mémoire sont désignées par le terme «une mémoire» que le terminal possède une ou une pluralité de zones mémoire. Cette mémoire 119 peut être celle de l'unité de traitement 110, d'un processeur, d'un module ou toute autre mémoire du terminal mobile 11 intégrée ou non dans ce dernier.

Le module de communication 114 du terminal mobile peut être configuré pour communiquer avec au moins un serveur distant 12, 12' par l'intermédiaire des moyens de communication 115 et via au moins un protocole de communication.

Le serveur distant 12, 12' peut comprendre des moyens de communication 120 et au moins une mémoire 121. Suivant un autre mode de réalisation, le serveur distant 12, 12' peut comprendre des moyens de communication 120 et un service web 122.

Le dispositif domotique électriquement autonome 13 comprend, de façon non limitative, au moins un module photovoltaïque 131, au moins un élément de stockage d'énergie électrique 132 connecté au(x) module(s) photovoltaïque(s), et un dispositif d'occultation 130 incluant un actionneur électromécanique. Le module photovoltaïque 131 peut être intégré mécaniquement au reste du dispositif domotique électriquement autonome 13. Suivant un mode de réalisation, le module photovoltaïque 131 peut être déporté du dispositif domotique électriquement autonome 13, par exemple, afin de l'éloigner d'une zone d'ombre ou de l'installer sur un emplacement recevant un ensoleillement plus important. Dans ce cas, le module photovoltaïque 131 n'est pas intégré mécaniquement au reste du dispositif domotique électriquement autonome 13, il n'est relié au reste du dispositif domotique électriquement autonome 13 que par un câble électrique.

Par la suite, le terme «un module photovoltaïque» désignera un ou plusieurs module(s) photovoltaïque(s). Il en est de même pour le terme «un élément de stockage d'énergie électrique» qui sera utilisé au singulier qu'il y ait un ou plusieurs éléments de stockage d'énergie électrique.

L'élément de stockage d'énergie électrique 132 est préférentiellement un moyen de stockage physico-chimique, comme une batterie d'accumulateurs, une pile rechargeable, un supercondensateur ou tout autre type d'élément équivalent. L'élément de stockage d'énergie électrique 132 est configuré pour alimenter en énergie électrique le dispositif d'occultation 130 et est destiné à être chargé à partir de l'énergie électrique générée par le module photovoltaïque 131.

Un dispositif d'occultation 130 comprend un dispositif d'entraînement motorisé mettant en mouvement un écran, entre au moins une première position et au moins une deuxième position. Le dispositif d'entraînement motorisé comprend l'actionneur électromécanique d'un élément mobile de fermeture, d'occultation ou de protection solaire tel qu'un volet roulant, un volet battant, une porte, une grille, un store ou tout autre matériel équivalent, appelé par la suite écran. Le dispositif motorisé peut toutefois également être une porte de garage ou un portail motorisé. L'actionneur électromécanique comprend un moteur électrique, un arbre de sortie et une unité électronique de contrôle (non représentés). En particulier, l'actionneur électromécanique est un actionneur tubulaire, destiné à être inséré dans un tube d'enroulement sur lequel s'enroule l'écran.

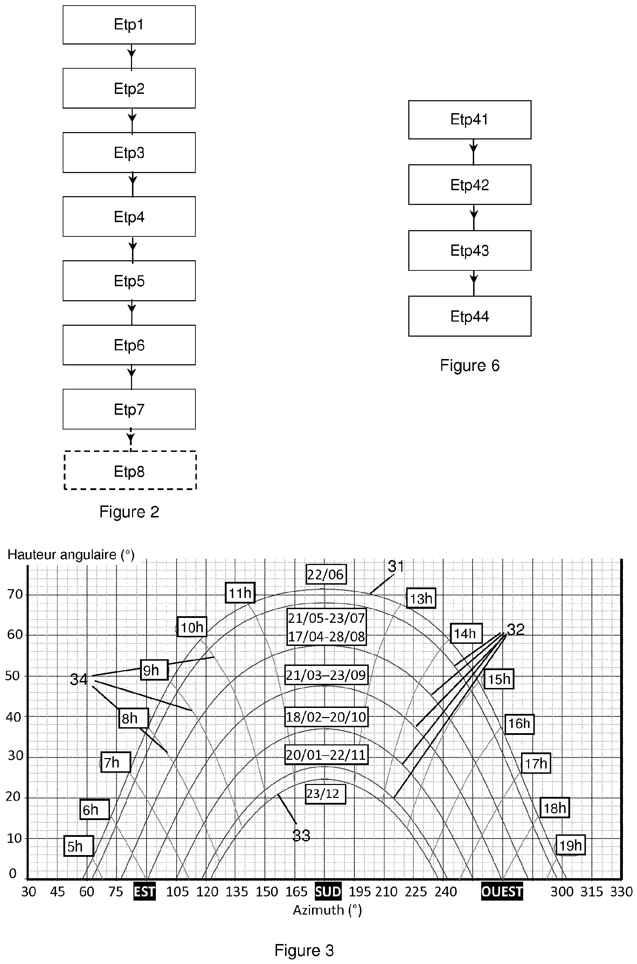

La figure 2 représente les étapes du procédé de test de compatibilité entre les besoins énergétiques d'un dispositif d'entraînement motorisé d'un dispositif d'occultation 130 et un emplacement prédéterminé selon un exemple de mode de réalisation de l'invention.

Le terme «emplacement prédéterminé» désigne l'emplacement sur lequel l'utilisateur souhaiterait installer le module photovoltaïque 131 d'un dispositif domotique électriquement autonome 13 et sur lequel ou au niveau duquel l'utilisateur teste l'ensoleillement.

Le procédé de test de compatibilité a pour but de vérifier si l'emplacement prédéterminé bénéficie d'un ensoleillement suffisant tout au long de l'année pour permettre l'installation du module photovoltaïque 131 d'un dispositif domotique électriquement autonome 13 et le bon fonctionnement de ce dispositif domotique électriquement autonome 13 tout au long de l'année.

Par « bon fonctionnement» d'un dispositif domotique électriquement autonome 13, on entend la capacité du dispositif d'occultation 130 de ce dispositif domotique électriquement autonome 13 à être utilisé de sorte à répondre à des besoins prédéterminés ou à effectuer chaque jour un nombre de cycles de fonctionnement au moins égal à un seuil prédéterminé.

Par « cycle de fonctionnement », on entend par exemple une course complète d'ouverture de l'écran et une course complète de fermeture de l'écran.

Le procédé est configuré pour tester automatiquement la compatibilité entre les besoins énergétiques du dispositif d'entrainement motorisé du dispositif d'occultation 130 et la capacité de l'éléments de stockage d'énergie électrique 132 du dispositif domotique électriquement autonome 13 alimenté par l'énergie électrique fournie par son module photovoltaïque 131 lorsque ce dernier est positionné à l'emplacement prédéterminé.

Le procédé de test peut être mis en oeuvre au moyen de tout type de terminal comme un terminal mobile ou un terminal fixe, par exemple un ordinateur de bureau. De façon préférentielle mais non limitative, le procédé de test est mis en oeuvre au moyen d'un terminal mobile 11. Par la suite, le procédé de test va être présenté à travers une telle mise en oeuvre.

Le procédé de test de compatibilité comprend une première étape Etp1 de sélection et d'enregistrement, dans une mémoire 119 du terminal mobile 11, d'un dispositif domotique électriquement autonome 13.

Suivant un mode de mise en oeuvre du procédé, un module d'affichage 116 peut afficher sur un écran du terminal mobile une liste de type de dispositifs domotiques électriquement autonomes 13. Cette liste de dispositifs domotique électriquement autonomes 13 peut être contenue dans une première base de données stockée dans une mémoire 119 du terminal mobile 11 ou une zone mémoire extérieure au terminal mobile 11, par exemple, une mémoire 121 d'un serveur distant 12, 12'. L'affichage de la liste des types de dispositifs domotiques électriquement autonomes 13 sélectionnables peut être de tout type connu. L'affichage peut être effectué, par exemple, sous la forme d'au moins une liste, d'au moins un tableau, d'icônes, d'un ou plusieurs menus déroulants ou toute autre forme d'affichage d'éléments sélectionnables équivalent. L'utilisateur peut ensuite choisir, parmi la liste affichée, le dispositif domotique électriquement autonome qu'il souhaiterait installer sur l'emplacement prédéterminé. La sélection peut être effectuée par action sur une interface homme machine, comme un écran tactile, un clavier réel ou virtuel, une molette ou toute autre interface.

Suivant un autre mode de mise en oeuvre du procédé, la sélection peut être réalisée par l'utilisateur en entrant une donnée permettant l'identification d'un dispositif domotique électriquement autonome. A cet effet, le module d'affichage 116 du terminal mobile 11 peut déclencher, sur l'écran du terminal mobile, l'affichage d'une fenêtre ou d'un champ dans lequel l'utilisateur peut entrer, via une interface homme-machine, une donnée permettant l'identification du dispositif domotique électriquement autonome 13 à tester. Il peut s'agir, par exemple, d'une référence produit, un nom de produit, un code ou tout autre identifiant de dispositif domotique électriquement autonome13.

Suivant un autre mode de mise en oeuvre du procédé, la sélection peut être réalisée par l'utilisateur en numérisant un code barre à une ou deux dimensions, par exemple, d'un catalogue, à l'aide d'un capteur optique interne ou externe au terminal mobile 11, par exemple un appareil photographique incorporé au terminal mobile.

Suivant un autre mode de mise en oeuvre du procédé, la sélection peut être réalisée par l'intermédiaire d'une étiquette d'identification radiofréquence (ou RFID pour « *Radio Frequency IDentification*» selon la terminologie anglo saxonne), une étiquette de communication en champ proche (ou NFC pour «*Near Field Communication*» selon la terminologie anglo saxonne) ou toute autre étiquette lisible par un dispositif à disposition de l'utilisateur, comme un terminal mobile 11.

Suivant un mode de mise en oeuvre du procédé, la sélection peut être suivie d'une étape de confirmation de la sélection effectuée avant de passer à l'étape suivante.

Suivant un mode de mise en oeuvre du procédé cette sélection peut être suivie d'une sous-étape de renseignement et d'enregistrement, dans une mémoire 119 du terminal mobile 11, de données complémentaires concernant le dispositif d'occultation 130 associé au dispositif domotique électriquement autonome 13 sélectionné. L'utilisateur peut être invité, par le module d'affichage 116 du terminal mobile 11, à renseigner les dimensions du dispositif d'occultation 130. Un affichage du terminal mobile peut inviter l'utilisateur à entrer, par exemple, les dimensions ou le poids de la fenêtre ou de la porte sur laquelle sera installé le dispositif domotique électriquement autonome sélectionné. A cet effet, le module d'affichage 116 du terminal mobile 11 peut déclencher, sur l'écran du terminal mobile 11, l'affichage d'une fenêtre ou d'un champ dans lequel l'utilisateur peut être invité à entrer, via une interface homme-machine, les dimensions ou le poids du dispositif d'occultation 130.

L'utilisateur peut également être invité à renseigner la matière de l'écran du dispositif d'occultation 130. De façon préférentielle, ce renseignement peut être effectué en sélectionnant une matière parmi une liste dépendant du type de dispositif domotique électriquement autonome 13 sélectionné. Lorsque l'utilisateur ne connaît pas la matière de l'écran ou hésite entre plusieurs matières, ce champ peut ne pas être renseigné ou la liste peut comprendre un élément du type «non renseigné». Suivant un mode de mise en oeuvre, lorsque la matière de l'écran n'est pas renseignée, cette dernière peut être une donnée de sortie et en fonction du test de compatibilité, le terminal mobile 11 peut proposer une ou plusieurs matières, pour l'écran du dispositif d'occultation 130, compatibles avec les résultats obtenus.

Pour cela, l'étape Etp1 de sélection et d'enregistrement du dispositif domotique électriquement autonome 13 peut comprendre une sous-étape de sélection et d'enregistrement, dans une mémoire 119 du terminal mobile 11, de la matière de l'écran. Comme décrit précédemment, cette sous-étape peut être mise en oeuvre par le module d'affichage 116 du terminal mobile 11.

Le module d'affichage 116 peut déclencher, sur l'écran du terminal mobile 11, l'affichage d'une liste de matière pour l'écran du dispositif d'occultation. Cette liste de matière peut être contenue dans une base de données stockée dans une mémoire 119 du terminal mobile 11 ou une zone mémoire extérieure au terminal mobile 11, comme une mémoire 121 d'un serveur distant 12, 12'. L'affichage de la liste des matières sélectionnables peut être de tout type connu, par exemple, sous la forme d'au moins une liste, d'au moins un tableau, d'icônes, d'un ou plusieurs menus déroulants ou toute autre forme d'affichage d'éléments sélectionnables équivalente. L'utilisateur peut ensuite sélectionner la matière choisie par action sur une interface homme machine, comme un écran tactile, un clavier réel ou virtuel, une molette ou toute autre interface.

Suivant un autre mode de mise en oeuvre du procédé, la sélection peut être réalisée par l'utilisateur en entrant directement la matière choisie via une interface homme-machine. A cet effet, le module d'affichage 116 du terminal mobile 11 peut déclencher, sur l'écran du terminal mobile, l'affichage d'une fenêtre ou d'un champ dans lequel l'utilisateur est invité à entrer la matière de l'écran.

La sélection du dispositif domotique électriquement autonome 13 peut être suivie d'une sous-étape de lecture de caractéristiques techniques associées au dispositif domotique électriquement autonome 13 sélectionné dans une deuxième base de données et d'enregistrement de ces caractéristiques techniques dans une mémoire 119 du terminal mobile 11. La deuxième base de données peut être stockée dans une mémoire 119 du terminal mobile 11 ou une zone mémoire extérieure au terminal mobile, par exemple celle 121 d'un serveur distant 12, 12'. Les premières et deuxièmes bases de données peuvent être confondues ou des bases de données distinctes.

Lorsque la deuxième base de données est stockée sur un serveur distant 12, 12', la lecture des caractéristiques techniques associées au dispositif domotique électriquement autonome sélectionné peut être effectuée par l'intermédiaire du module de communication 114 du terminal mobile.

Les caractéristiques techniques associées au dispositif domotique électriquement autonome 13 sélectionné peuvent comprendre de façon non limitative les paramètres suivants : la consommation électrique moyenne journalière du dispositif d'occultation 130, et/ou celle de son dispositif d'entraînement motorisé, pour un nombre donné de cycles de fonctionnement et/ou un nombre d'actions, la consommation suivant différentes actions du dispositif d'occultation 130, le couple nominal fourni par le dispositif d'entraînement motorisé, le type et le nombre de modules photovoltaïques 131 associés au dispositif d'occultation 130, la surface et le rendement du ou des modules photovoltaïques 131, le type et le nombre d'éléments de stockage d'énergie électrique 132 ainsi que leurs caractéristiques techniques comme leur capacité, leur autodécharge, etc.

A titre illustratif, dans le cas d'une application à un ou plusieurs volets roulants, un cycle de fonctionnement peut correspondre à une montée complète de l'écran et une descente complète de ce dernier. De la même manière, dans le cas d'une application à un volet battant, un portail ou une porte motorisée, un cycle de fonctionnement peut correspondre à une ouverture et une fermeture de l'écran. De même, une action peut correspondre, par exemple, à une orientation de lames d'un store vénitien, une montée ou une descente partielle de l'écran d'un volet roulant, une action spécifique comme un verrouillage de l'écran ou toute autre action possible du dispositif d'occultation.

Suivant un mode de mise en oeuvre du procédé, en fonction du dispositif domotique électriquement autonome 13 sélectionné, de ses dimensions renseignées et éventuellement d'autres paramètres, tels que le poids ou la matière de l'écran du dispositif d'occultation 130 associé, le terminal mobile 11 peut sélectionner un type d'actionneur électromécanique, un ou plusieurs modules photovoltaïques 131 et/ou un ou plusieurs éléments de stockage d'énergie 132. Suivant une variante de mise en oeuvre, le terminal mobile peut réitérer l'ensemble du procédé de test pour différents modules photovoltaïques 131 et/ou différents éléments de stockage d'énergie 132.

Le procédé comprend une étape Etp2 de renseignement et d'enregistrement, dans la mémoire 119 du terminal mobile 11, de signaux représentatifs de données de position relative à l'emplacement prédéterminé. Les données de position peuvent comprendre la localisation, c'est-à-dire la localisation ou position géographique, l'orientation et/ou l'inclinaison de l'emplacement prédéterminé. Par « orientation », on entend l'angle formé par la normale au plan photosensible du module photovoltaïque relativement à une direction cardinale. Par « inclinaison », on entend l'angle formé par la normale au plan photosensible du module photovoltaïque relativement à la direction verticale. La position est complètement déterminée par exemple par les paramètres suivants : longitude, latitude, azimut et hauteur angulaire. Une valeur de chacun de ces paramètres fait partie d'une information de position. L'étape Etp2 peut comprendre des sous-étapes de renseignement et d'enregistrement, dans la mémoire 119 du terminal mobile 11, de signaux représentatifs, respectivement, de la localisation, de l'orientation et éventuellement de l'inclinaison de l'emplacement prédéterminé. Ces données de position peuvent, par exemple, être estimées par l'utilisateur en utilisant une ou plusieurs applications mobiles enregistrées dans une mémoire 119 du terminal mobile en se plaçant à proximité de l'emplacement prédéterminé.

La localisation peut être fournie par les signaux délivrés par un dispositif de géopositionnement embarqué dans le terminal mobile et utilisant un système de positionnement par satellites (ou GNSS pour « *Global Navigation Satellite System*» selon la terminologie anglo-saxonne), comme le système GPS, Galiléo, Glonass ou tout autre système équivalent. Le terminal mobile peut afficher, par exemple, la longitude et la latitude de l'emplacement prédéterminé.

Suivant un mode de mise en oeuvre, le terminal mobile peut afficher par exemple, le nom de la ville et/ou le code postal de la ville où se situe le terminal mobile ou tout autre type de localisation. Le terminal mobile peut également afficher l'altitude de l'emplacement prédéterminé.

La localisation peut également être renseignée directement par l'utilisateur, par exemple, lorsque la disponibilité des signaux de positionnement par satellites n'est pas suffisante pour obtenir une estimation de la localisation ou lorsque le terminal mobile n'est pas équipé d'un dispositif de positionnement par satellites. Le module d'affichage du terminal mobile peut, par exemple, déclencher, sur l'écran du terminal mobile, l'affichage d'une fenêtre ou d'un champ dans lequel l'utilisateur peut entrer des informations sur la localisation de l'emplacement prédéterminé, comme le nom de la ville dans laquelle il se situe et/ou son code postal. Ces informations peuvent être renseignées par l'utilisateur, par exemple, à l'aide d'une interface homme-machine du terminal comme un écran tactile, un clavier réel ou virtuel ou toute autre interface équivalente. Par la suite, le module de communication 114 du terminal mobile peut interroger un service web 122 sur un serveur distant 12, 12', via un protocole de communication, afin d'obtenir les coordonnées de la ville où se situe l'utilisateur.

Suivant une variante de mise en oeuvre du procédé, les coordonnées de l'emplacement prédéterminé peuvent être renseignées directement par l'utilisateur sans avoir à interroger le serveur distant 12, 12'.

Suivant un autre exemple de mise en oeuvre, les renseignements sur la localisation entrés par l'utilisateur peuvent servir pour vérifier les données de position de l'emplacement prédéterminé estimée par le terminal mobile. Si les deux informations coïncident, l'utilisateur peut valider les données de position déterminée par le terminal mobile 11. Dans le cas contraire, l'utilisateur peut refaire une mesure de position à l'aide du terminal mobile ou utiliser les données de position estimées par le terminal mobile 11.

L'orientation de l'emplacement prédéterminé peut être fournie par le terminal mobile positionné sur l'emplacement prédéterminé ou selon une orientation similaire à celle de l'emplacement prédéterminé. L'orientation peut par exemple, être fournie par un logiciel applicatif du terminal mobile 11 utilisant les signaux délivrés par un dispositif d'orientation installé dans le terminal mobile de l'utilisateur. Il peut s'agir d'un magnétomètre ou tout autre capteur configuré pour délivrer un signal représentatif de l'orientation du terminal mobile. L'orientation peut également être renseignée directement par l'utilisateur, par exemple, lorsque le terminal mobile n'est pas équipé de dispositif d'orientation ou dans un but de redondance, pour confirmer la position de l'emplacement prédéterminé et fournie par le terminal mobile 11. De façon avantageuse, cette confirmation peut permettre de compenser un mauvais calibrage et/ou une faible précision du capteur du terminal mobile et/ou une erreur de mesure due à la présence d'un élément perturbant la mesure du champ magnétique terrestre par le terminal mobile, comme un aimant ou tout autre élément magnétique.

Suivant une variante de mise en oeuvre, le module de communication 114 du terminal mobile 11 peut interroger, via un protocole de communication, un service web 122, sur un serveur distant 12, 12', avec les données de position de l'emplacement prédéterminé. Ces données de position peuvent provenir, par exemple, de signaux délivrés par un dispositif de géopositionnement embarqué dans le terminal mobile ou de données de localisation entrée par l'utilisateur comme le nom de la ville dans laquelle il se situe et/ou son code postal. En retour, le module de communication 114 peut recevoir des données représentatives d'une vue satellite correspondant aux données de position et les transmettre à un module d'affichage. Le module d'affichage 116 peut ensuite afficher, sur un écran tactile du terminal mobile 11, la vue satellite correspondante et inviter l'utilisateur à indiquer la position de l'emplacement prédéterminé. L'utilisateur peut, par exemple, être invité à sélectionner la maison et la façade sur laquelle il souhaite effectuer le test de compatibilité. Cette sélection peut, par exemple, être réalisée en traçant un trait sur l'écran tactile, à l'aide de son doigt ou d'un stylet, sur l'image de cette façade. En retour un module de calcul 118 du terminal mobile peut calculer l'orientation de l'emplacement prédéterminé et stocker les signaux représentatifs de cette orientation dans la mémoire 119 du terminal mobile 11. De façon avantageuse, cette variante permet d'obtenir automatiquement l'orientation d'un emplacement prédéterminé à l'aide d'un terminal mobile 11 ne possédant pas de magnétomètre. Elle permet également de vérifier les données fournies par le magnétomètre du terminal mobile ou éventuellement de calibrer un magnétomètre.

Suivant un mode de mise en oeuvre du procédé, le terminal mobile 11 peut également afficher l'inclinaison de l'emplacement prédéterminé, par exemple, en exploitant les signaux électriques délivrés par un accéléromètre, un inclinomètre ou tout autre dispositif équivalent embarqué dans le terminal mobile 11. Comme énoncé précédemment, la mesure de l'inclinaison peut également être renseignée par l'utilisateur par des moyens similaires à ceux décrits précédemment.

Suivant une variante de mise en oeuvre du procédé, la valeur de l'inclinaison de la position prédéterminée peut ne pas être mesurée et être considérée comme constante. Suivant un premier exemple, on peut considérer que le dispositif domotique électriquement autonome 13 sera installé sur un mur vertical par rapport au sol et par conséquent, son module photovoltaïque 131 sera également parallèle à cette verticale. Par la suite, le terme «vertical» fera toujours référence à la verticale par rapport au sol.

Suivant un autre exemple, le module photovoltaïque 131 associé au dispositif d'occultation 130 peut être monté sur un support mécanique non parallèle au mur sur lequel ce dispositif d'occultation est installé. Dans ce cas, l'inclinaison du module photovoltaïque 131, et donc de l'emplacement prédéterminé, sera liée à la géométrie de ce support mécanique. La valeur de l'inclinaison peut, par exemple, faire partie des caractéristiques techniques associées au dispositif domotique électriquement autonome 13 sélectionné lues après sa sélection au cours de l'étape Etp1.

Une fois déterminées et, éventuellement, vérifiées, ces différentes informations relatives à la position de l'emplacement prédéterminé peuvent être stockées dans la mémoire 119 du terminal mobile 11.

Tout ou partie de cette étape Etp2 peut être refaite en cas d'erreur de mesure, comme une erreur de positionnement du terminal mobile 11.

Le procédé comprend une étape Etp3 d'estimation et d'enregistrement, dans une mémoire 119 du terminal mobile 11, de signaux représentatifs d'un diagramme solaire au niveau de l'emplacement prédéterminé.

Pour rappel, le diagramme solaire, également appelé diagramme des trajectoires du soleil, indiquent, pour différents instants de l'année, la hauteur angulaire (également appelée hauteur d'angle ou élévation) du soleil et l'azimut de la projection horizontale du rayon solaire pour une latitude donnée. Ce diagramme solaire permet de définir la trajectoire du soleil perçue depuis ce lieu pour différents jours de l'année. Il peut comprendre, pour différents instants de la journée et pour différents jours de l'année, la position du soleil par rapport à l'emplacement prédéterminé, par exemple, en coordonnées sphériques. Ce diagramme solaire permet de définir les instants pendant lesquels il existe un rayonnement solaire direct incident sur une surface donnée.

La figure 3 est un exemple de représentation graphique d'un diagramme solaire pour une latitude et une longitude données. Chaque courbe 31, 32, 33 représente la course apparente du soleil en fonction de l'heure pour une date particulière de l'année. Par exemple, les courbes référencées 31 et 33 représentent respectivement la course apparente du soleil au solstice d'été et celle au solstice d'hiver. Ces deux courbes 31, 33 permettent de définir une enveloppe dans laquelle se situent les différentes courses apparentes du soleil, pour la latitude et la longitude considérées, au cours d'une année complète. Les courbes référencées 34 représentent différentes heures particulières de la journée. Cette figure permet de visualiser, pour une latitude donnée, l'azimut et la hauteur angulaire du soleil à différents instants d'une l'année. Par exemple, à la latitude et la longitude considérées, le 22 juin à 10h (heure solaire) le soleil a une hauteur angulaire de 58°, par rapport à l'horizon, et son azimut est à 118° vers l'est, par rapport au nord.

Afin d'estimer le diagramme solaire au niveau de l'emplacement prédéterminé, le module de communication 114 du terminal mobile 11 peut interroger, via un protocole de communication, un service web 122 avec les données de position de l'emplacement prédéterminé. En retour, le module de communication 114 peut recevoir les positions du soleil, par exemple en coordonnées sphériques, pour différents instants de l'année. Ces positions peuvent, par exemple, être reçues pour chaque minute et chaque jour d'une année.

Suivant une variante de mise en oeuvre, les données du diagramme solaire peuvent être moins précises et, par exemple, ne comporter les positions du soleil que pour chaque semaine, chaque mois de l'année ou tout autre période régulière. Dans ce cas, les données manquantes peuvent, par exemple, être extrapolées ou considérées comme identiques pour chaque jour de la période.

Suivant une variante de mise en oeuvre, le module de calcul 118 du terminal mobile 11 peut calculer les données du diagramme solaire pour l'emplacement prédéterminé à partir d'un algorithme stocké dans une mémoire 119 du terminal mobile 11.

Suivant une autre variante, le terminal mobile 11 peut contenir dans une mémoire 119 des tableaux de données de diagramme solaire pour différentes latitudes. Lors de l'étape d'estimation des signaux représentatifs du diagramme solaire au niveau de l'emplacement prédéterminé, le module de calcul 118 sélectionne le tableau de données correspondant à la latitude la plus proche de la position de l'emplacement prédéterminé.

Le procédé peut comprendre une étape Etp4 de définition et d'enregistrement dans une mémoire 119 du terminal mobile des données d'un masque d'ombrage, autrement dit masque solaire.

Ce masque d'ombrage est une donnée représentative des différents éléments susceptibles de projeter une ombre sur l'emplacement prédéterminé et donc sur le module photovoltaïque 131 du dispositif domotique électriquement autonome 13 lorsque ce dernier est installé au niveau de cet emplacement prédéterminé. Le masque d'ombrage correspond à tout élément naturel ou artificiel susceptible de venir masquer, à au moins un moment de la journée et/ou de l'année, tout ou partie du rayonnement solaire direct et/ou indirect incident au niveau de l'emplacement prédéterminé. Il peut s'agir, par exemple, de bâtiments ou de parties de bâtiment, comme une avancée de toit, un balcon supérieur, de végétation, comme un arbre, une haie, de montagnes ou autre relief. Suivant leurs distances par rapport à l'emplacement prédéterminé et suivant leur hauteur, ces éléments engendrent des ombres plus ou moins localisées sur le ou les modules photovoltaïques 131 associé au dispositif d'occultation 130 et génèrent des pertes de production électrique plus ou moins importantes. Les éléments lointains forment la ligne d'horizon. Ils génèrent par leur taille et leur distance une ombre qui peut couvrir, durant certaines plages horaires, une partie ou l'intégralité du module photovoltaïque.

Ce masque d'ombrage peut comprendre les coordonnées sphériques des points formant le contour des différents éléments susceptibles de venir masquer le rayonnement solaire sur l'emplacement prédéterminé. Il peut être défini de différentes manières.

Selon un premier mode de mise en oeuvre, le masque d'ombrage peut être défini automatiquement par le terminal mobile à l'aide d'un logiciel applicatif utilisant un algorithme stocké dans la mémoire 119 du terminal mobile 11. L'utilisateur peut prendre une photographie à l'aide du terminal mobile 11, par exemple, via un logiciel applicatif de photographie, en positionnant le terminal mobile sur l'emplacement prédéterminé.

Lorsque le module photovoltaïque 131 du dispositif domotique électriquement autonome 13 sélectionné est disposé sur un support mécanique incliné par rapport à la verticale, l'utilisateur peut prendre la photographie en s'assurant que l'axe optique de l'objectif du terminal mobile 11 et le support mécanique sont bien perpendiculaires. Pour cela, le logiciel applicatif de photographie du terminal mobile 11 peut comprendre une aide indiquant, à l'utilisateur, comment incliner le terminal mobile.

Pour la suite, on supposera que l'axe optique de l'objectif du terminal mobile est perpendiculaire au terminal mobile 11. On suppose également que la valeur de l'angle formé par le support mécanique du module photovoltaïque 131 et la verticale par rapport au sol a été renseignée au préalable. Cette valeur d'angle peut, par exemple avoir été renseignée par l'utilisateur. Suivant un autre mode de mise en oeuvre, la valeur de cet angle peut faire partie des caractéristiques techniques associées au dispositif domotique électriquement autonome 13.

L'aide du logiciel applicatif peut indiquer, à l'utilisateur, l'inclinaison à donner au terminal mobile 11 pour que la valeur de l'angle formé par le terminal mobile 11 et la verticale, corresponde avec celle de l'angle du support mécanique du module photovoltaïque 131 par rapport à cette même verticale. Le logiciel applicatif peut, par exemple, comparer la valeur de l'angle fournie par un accéléromètre ou un inclinomètre embarqué dans le terminal mobile avec celle du support et, lorsque les deux valeurs d'angle sont sensiblement égales, envoyer un signal. Ce signal peut, par exemple, être un signal sonore, un signal lumineux, une vibration ou tout autre type de signal perceptible par l'utilisateur.

Selon une variante de mise en oeuvre, l'utilisateur peut enregistrer une photographie, prise à l'aide d'un appareil photographique positionné sur l'emplacement prédéterminé, dans la mémoire 119 du terminal mobile 11. Comme énoncé précédemment, lorsque le module photovoltaïque 131 du dispositif domotique électriquement autonome 13 sélectionné est disposé sur un support mécanique incliné par rapport à la verticale, l'utilisateur peut prendre la photographie en s'assurant que la valeur de l'angle formé par une perpendiculaire à l'axe optique de l'objectif de l'appareil photographique et la verticale (définie par rapport au sol) est bien sensiblement égale à celle de l'angle formé par le support mécanique et cette même verticale.

Suivant la position de l'emplacement prédéterminé, une photographie prise à la verticale au niveau de cet emplacement peut ne pas capter l'ensemble des informations nécessaires à la définition d'un masque d'ombrage précis. En effet, la valeur de l'angle de champ d'un objectif de terminal mobile 11 est inférieure à celle du champ d'un module photovoltaïque 131. On rappelle que le champ d'un module photovoltaïque correspond à l'espace angulaire, en azimut et en hauteur angulaire, pouvant être capté par le module photovoltaïque. Ce champ correspond à la différence entre les deux angles d'incidence extrêmes, en azimut et en hauteur angulaire, des rayons solaires permettant à un module photovoltaïque de produire une valeur d'énergie électrique supérieure à une valeur de seuil prédéterminée. A titre d'exemple, un objectif de terminal mobile 11 possède généralement un angle de champs de l'ordre de 50° en azimut et 35° en hauteur angulaire alors qu'un module photovoltaïque 131 possède généralement un champ de l'ordre de 160° en azimut et en hauteur angulaire.

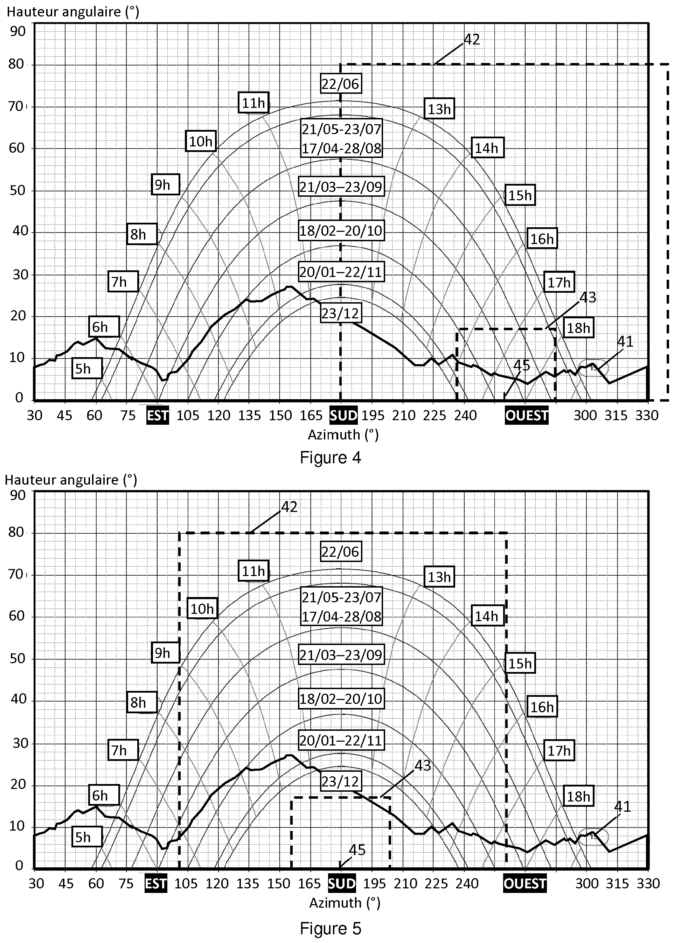

A titre d'illustration, les figures 4 et 5 représentent le diagramme solaire de la figure 3 sur lequel ont été superposés différents éléments 41 susceptibles de masquer le rayonnement solaire. Sur ces figures, figurent également des cadres 42, 43 représentant respectivement le champ d'un module photovoltaïque 131 placé sur un support vertical, par exemple un mur, au niveau de l'emplacement prédéterminé 45 et l'angle de champ de l'objectif d'un terminal mobile 11 placé également au niveau de cet emplacement prédéterminé 45. Ces deux cadres 42, 43 sont centrés sur les coordonnées (azimut, hauteur angulaire) de l'emplacement prédéterminé 45. En fait, dans ces deux exemples, la hauteur angulaire de l'emplacement prédéterminé étant nulle, seule est représentée la partie du cadre correspondant aux valeurs de hauteur d'angle positives.

Dans les deux exemples illustrés par les figures 4 et 5, on suppose que le champ du module photovoltaïque a une valeur de 160° en azimut et en hauteur angulaire et que l'objectif du terminal mobile possède un angle de champs d'une valeur de l'ordre de 50° en azimut et 35° en hauteur angulaire.

La figure 4 représente le cas d'un emplacement prédéterminé 45 positionné à un azimut de 260° par rapport au nord. Dans cette configuration, une prise de vue au niveau de l'emplacement prédéterminé permet de définir de façon relativement précise un masque d'ombrage. En effet, la zone couverte par l'angle de champ de l'objectif comporte un maximum d'intersections avec les trajectoires du soleil vues depuis l'emplacement prédéterminé 45.

La figure 5 représente un autre cas dans lequel l'emplacement prédéterminé 45 est positionné à un azimut de 180° par rapport au nord. Cette configuration montre que l'angle de champ de l'objectif du terminal mobile est trop étroit pour capter l'ensemble des informations nécessaires à la définition d'un masque d'ombrage précis. De plus l'intersection entre l'enveloppe englobant les trajectoires du soleil au court de l'année et l'angle de champ de l'objectif du terminal mobile est assez réduite. Cette valeur d'angle de champ permet néanmoins de capter une zone contenant la course du soleil en hiver. Cela permet de détecter la présence ou non d'éléments susceptibles de masquer le rayonnement solaire reçu par le module photovoltaïque durant la période de l'année la plus critique, c'est-à-dire la période durant laquelle la production d'énergie électrique est la plus faible.

Afin d'augmenter la précision de l'étape de définition du masque d'ombrage, une première méthode peut consister à augmenter l'angle de champ de l'objectif du terminal mobile 11. Cette augmentation peut être obtenue en adaptant sur l'objectif du terminal mobile un complément d'optique de façon à obtenir l'équivalent d'un objectif hypergone (ou «*fisheye*» selon la terminologie anglo-saxonne).

Suivant une variante de mise en oeuvre, l'utilisateur peut prendre plusieurs photographies ou un film depuis l'emplacement prédéterminé en faisant varier l'azimut et la hauteur angulaire de l'angle de prise de vue. Les photographies prises peuvent ensuite être fusionnées de façon à obtenir une photographie panoramique couvrant un champ voisin de celui du module photovoltaïque 131. Une interface graphique peut assister l'utilisateur dans la réalisation de ce film ou de ces photos en représentant sur un même écran (par exemple en coordonnées polaires) :
- le champ 42 constitué par l'ensemble des directions depuis lesquelles le module photovoltaïque est apte à recevoir et à convertir de l'énergie solaire,
- les zones pour lesquelles une ou plusieurs photographies et/ou un film déjà a déjà été enregistré, et
- éventuellement, un cadre ou une zone pointeur ou curseur indiquant les contours du champ de l'objectif du terminal mobile 11 dans sa position courante ou instantané. Cette position peut être déterminée par le dispositif d'orientation 112.

Le champ 42 peut occuper l'intégralité d'une fenêtre d'interface. Les zones pour lesquelles une ou plusieurs photographies et/ou un film a déjà été enregistré peuvent être représentées dans cette fenêtre par les données photographiques déjà enregistrée, c'est-dire que dans ces zones on a une représentation fidèle de ce que l'on voit réellement. Alternativement, zones pour lesquelles une ou plusieurs photographies et/ou un film a déjà été enregistré peuvent être représentées dans cette fenêtre par une couleur déterminée ou prédéfinie. Le cadre ou la zone pointeur ou curseur indiquant les contours du champ de l'objectif du terminal mobile 11 dans sa position courante ou instantané peut aussi être représenté dans cette fenêtre par une couleur déterminée ou prédéfinie.

Suivant une autre variante de mise en oeuvre, l'utilisateur ne prend qu'une seule photographie depuis l'emplacement prédéterminé et optimise la valeur de l'angle de prise de vue. Cette optimisation a pour but de maximiser les intersections entre la zone couverte par l'objectif et la course du soleil au cours d'une année. A cet effet, l'étape Etp4 de définition et d'enregistrement des données d'un masque d'ombrage peut comprendre une sous-étape d'optimisation de la valeur d'un angle de prise de vue par rapport à une droite perpendiculaire à l'emplacement prédéterminé. De façon avantageuse, cette sous étape d'optimisation permet de simplifier la définition du masque d'ombrage tout en gardant une bonne précision de ce dernier.

On suppose que le module de calcul 118 connaît la valeur de l'angle de champ de l'objectif du terminal mobile 11, c'est-à-dire que cette valeur est enregistrée dans une mémoire 119 du terminal mobile 11. Cette valeur peut provenir de la lecture des paramètres du terminal mobile par le module de calcul ou de la lecture des métadonnées de photographies prise à l'aide de ce terminal mobile. Suivant une variante, cet angle de champ peut être renseigné par l'utilisateur, par exemple, lorsqu'il adapte sur le terminal mobile un objectif ou un complément d'optique, par exemple, un objectif hypergone (ou «*fisheye*» selon la terminologie anglo-saxonne).

Le module de calcul recherche ensuite la valeur de l'angle de prise de vue optimale permettant de définir le masque solaire. Suivant un mode de mise en oeuvre, l'optimisation peut être faite suivant la hauteur angulaire.

On se réfère aux figures 4 et 5. Soient A et H les valeurs de l'azimut et de la hauteur angulaire du centre du cadre 43 représentant l'angle de champ de l'objectif du terminal mobile. Soit αₐ et αₕ respectivement la valeur de l'angle de champ en azimut et en hauteur d'élévation de l'objectif du terminal mobile. Dans ces conditions, les quatre coins du cadre 43 représentant l'angle de champ de l'objectif du terminal mobile ont pour coordonnées (A-αₐ/2; H+αₕ/2 ), (A+αₐ/2; H+αₕ/2 ), (A+αₐ/2; H-αₕ/2 ) et (A-αₐ/2; H-αₕ/2 ).

Suivant un premier mode d'optimisation, le module de calcul 118 peut considérer, pour la hauteur angulaire H, la valeur de la hauteur angulaire du soleil au solstice d'été et celle au solstice d'hiver et choisir la moyenne de ces deux valeurs comme valeur optimale de la hauteur angulaire. Sur la figure 4 ou 5, cela revient à placer, en hauteur angulaire, le centre du cadre 43 représentant l'angle de champ de l'objectif du terminal mobile entre la courbe représentative de la course du soleil au solstice d'été et celle au solstice d'hiver.

Suivant une variante, la valeur de l'angle de prise de vue peut être choisie de manière à favoriser la détection des éléments du relief susceptibles de masquer le rayonnement solaire au niveau de l'emplacement prédéterminé. Pour cela, le module de calcul peut rechercher la valeur de l'angle de prise de vue du terminal mobile permettant à l'angle de champ de son objectif de couvrir les positions des trajectoires apparentes du soleil proches du solstice d'hiver. Cette variante revient à positionner le cadre 43 représentant l'angle de champ de l'objectif du terminal mobile, à l'intérieur de l'enveloppe contenant les différentes courses apparentes du soleil, au plus près de la courbe représentative de la trajectoire du soleil au solstice d'hiver. Cette valeur d'angle peut, par exemple, être obtenue en calculant la valeur de la hauteur angulaire H telle que la valeur de H-αₕ/2 soit sensiblement égale à la valeur de la hauteur angulaire du soleil au solstice d'hiver, αₕ représentant la valeur de l'angle de champ, en hauteur d'élévation, de l'objectif du terminal mobile.

Suivant une variante, la valeur d'angle peut être obtenue de façon itérative. Soit A l'azimut de l'emplacement prédéterminé α la valeur de l'angle de champ de l'objectif du terminal mobile. Dans un premier temps, le module de calcul 118 initialise une valeur H à zéro. Le module de calcul teste ensuite si la distance entre un des deux points de coordonnées (A-αₐ/2 ; H-αₕ/2) et (A+αₐ/2 ; H-αₕ/2) et un point de la trajectoire du soleil au solstice d'hivers est inférieure à une valeur prédéterminée. Dans l'affirmative, la valeur H correspond à l'angle de prise de vue optimale. Sinon, le module de calcul incrémente la valeur de H et renouvelle le test jusqu'à ce que la distance considérée soit inférieure à la valeur prédéterminée ou jusqu'à ce que la totalité du champ du module photovoltaïque soit parcouru en hauteur angulaire.

De façon avantageuse, le fait de considérer la trajectoire du soleil au solstice d'hiver, permet de détecter les éléments susceptibles de masquer le rayonnement solaire au pire moment de l'année, c'est-à-dire la période de l'année pendant laquelle la production d'énergie électrique par un module photovoltaïque est la plus faible.

Suivant une autre variante, la valeur de l'angle de prise de vue peut être optimisée de manière à favoriser la détection des éléments susceptibles de masquer le rayonnement solaire situé en hauteur. Il peut s'agir par exemple d'une avancée de toit. Dans ce cas, le module de calcul recherche la valeur de l'angle de prise de vue du terminal mobile permettant à l'angle de champ, de son objectif, de couvrir les positions des trajectoires apparentes du soleil proches du solstice d'été.

Cette valeur d'angle peut, par exemple, être obtenue en calculant la valeur de la hauteur angulaire H telle que la valeur de H+αₕ/2 soit sensiblement égale à la valeur de la hauteur angulaire du soleil au solstice d'été, αₕ représentant la valeur de l'angle de champ de l'objectif du terminal mobile en hauteur d'angle.

Suivant une variante la valeur de l'angle de prise de vue peut être obtenue de façon itérative. Soit A l'azimut de l'emplacement prédéterminé αₕ la valeur de l'angle de champ en hauteur d'angle de l'objectif du terminal mobile. Dans un premier temps, le module de calcul 118 initialise une valeur H à 90°- αₙ/2. Le module de calcul teste ensuite si la distance entre un des deux points de coordonnées (A-αₐ/2 ; H+αₕ/2) et (A+αₐ/2 ; H+αₕ/2) et un point de la trajectoire du soleil au solstice d'été est inférieure à une valeur prédéterminée. Dans l'affirmative, la valeur H correspond à la hauteur d'angle de l'angle de prise de vue optimale. Sinon, le module de calcul décrémente la valeur de H et renouvelle le test jusqu'à ce que la distance considérée soit inférieure à la valeur prédéterminée ou jusqu'à ce que le champ du module photovoltaïque soit parcouru en hauteur angulaire.

Une fois la valeur de l'angle de prise de vue optimisée, le logiciel applicatif de photographie du terminal mobile peut inviter l'utilisateur à effectuer une photographie au niveau de l'emplacement prédéterminé avec cet angle de prise de vue. Pour cela, le logiciel applicatif peut comprendre une aide indiquant, à l'utilisateur, l'inclinaison à donner au terminal mobile. A cet effet, le logiciel applicatif peut, par exemple, utiliser la valeur de l'angle fournie par un accéléromètre ou un inclinomètre embarqué dans le terminal mobile. Lorsque l'inclinaison de l'axe optique de l'objectif du terminal mobile est sensiblement égale à la valeur de l'angle de prise de vue optimisée, le logiciel applicatif peut envoyer un signal comme un signal sonore, un signal lumineux, une vibration, une indication sur l'écran ou tout autre type de signal perceptible par l'utilisateur. Par ailleurs, une indication sur l'écran du terminal mobile peut être prévue pour faciliter la convergence d'orientation du terminal mobile vers la position de prise de vue optimale.

Suivant une autre variante, l'optimisation de la valeur de l'angle de prise de vue peut être effectuée suivant l'axe azimutal et celui de la hauteur d'angle. Dans ce mode de mise en oeuvre illustré sur la figure 6, le module de calcul commence par estimer trois critères également appelé indicateurs.

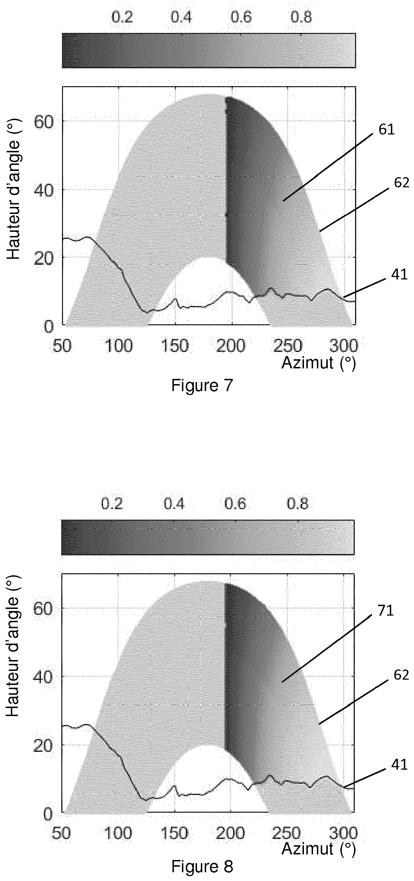

Au cours d'une sous-étape Etp41, un premier indicateur correspondant au cosinus de l'angle d'incidence du soleil en fonction de l'azimut et de la hauteur d'angle du soleil est estimé. La figure 7 est une représentation graphique de la superposition de l'enveloppe 62 contenant les différentes courses apparentes du soleil au niveau de l'emplacement prédéterminé, du masque d'ombrage 41 et de la courbe représentative 61 du cosinus de l'angle d'incidence du rayonnement solaire en fonction de l'azimut et de la hauteur d'élévation du soleil. Ce premier indicateur traduit le fait que le rayonnement solaire direct n'arrive pas perpendiculairement à la surface sensible du module photovoltaïque. En effet, lorsque les rayons du soleil sont perpendiculaires à la surface sensible du module photovoltaïque, le rayonnement solaire direct est maximal. Par contre, lorsque les rayons du soleil ne sont pas perpendiculaires à cette surface, ils couvrent une plus grande surface, le rayonnement reçu par le module photovoltaïque est donc moins intense. Ce phénomène est connu sous le nom "effet de cosinus ". Ce premier indicateur correspond à un coefficient à appliquer à la valeur du rayonnement solaire maximal pour tenir compte de l'angle d'incidence des rayons du soleil.

L'optimisation de la valeur de l'angle de prise de vue comprend une sous-étape Etp42 d'estimation d'un deuxième indicateur correspondant à la réponse du module photovoltaïque 131 en fonction de l'azimut et de la hauteur angulaire des rayons du soleil. Ce deuxième indicateur correspond au facteur d'angle d'incidence (également connu sous le signe anglo saxon IAM pour « *Incidence Angle Modifier*») qui décrit l'influence de l'angle d'incidence des rayons solaires sur le rendement du module photovoltaïque. Lorsque le rayonnement solaire arrive perpendiculairement à la surface sensible du module photovoltaïque, il n'y a pas ou très peu de réflexion sur la surface du module photovoltaïque. Dans ce cas de figure, le rendement du module photovoltaïque est maximal et la valeur du facteur d'angle d'incidence est égale à 1. La courbe de rendement qui caractérise les performances du module photovoltaïque est définie par rapport à cet angle d'incidence optimal. Lorsque les rayons solaires dévient de la situation optimale, la réflexion du rayonnement incident sur la surface du module photovoltaïque augmente et le facteur d'angle diminue comme le rendement du module photovoltaïque. La figure 8 représente la superposition de l'enveloppe 62 contenant les différentes courses apparentes du soleil au niveau de l'emplacement prédéterminé, du masque d'ombrage et du deuxième indicateur 71 en fonction de l'azimut et la hauteur d'angle du soleil.

Si on se limite à ces deux critères comme valeur à maximiser, l'optimisation va se diriger vers les zones où cette valeur est maximale et on risque de n'avoir pas ou peu d'informations sur plusieurs journées de l'année notamment celles en hiver, où les valeurs maximales du rayonnement solaire restent faibles. Or, c'est le fonctionnement lors de ces journées hivernales qui détermine la viabilité du système photovoltaïque autonome à l'emplacement donné. Afin d'éviter de telles situations, un troisième critère est introduit afin de prendre en compte la pertinence d'une valeur du rayonnement pour une position donnée du soleil dans le ciel. La pertinence de la valeur est définie comme suit: la journée est d'autant plus importante dans le calcul que sa durée, et donc la valeur du rayonnement solaire total reçu par le module photovoltaïque sur une journée est faible.

Le module de calcul estime donc un troisième indicateur proportionnel à l'inverse de la durée d'ensoleillement au niveau de la position prédéterminée au cours d'une sous-étape Etp43. Le troisième critère permet d'introduire une pondération journalière à l'estimation en augmentant l'importance des journées d'hivers pour lesquelles le fonctionnement du dispositif domotique électriquement autonome est plus délicat.

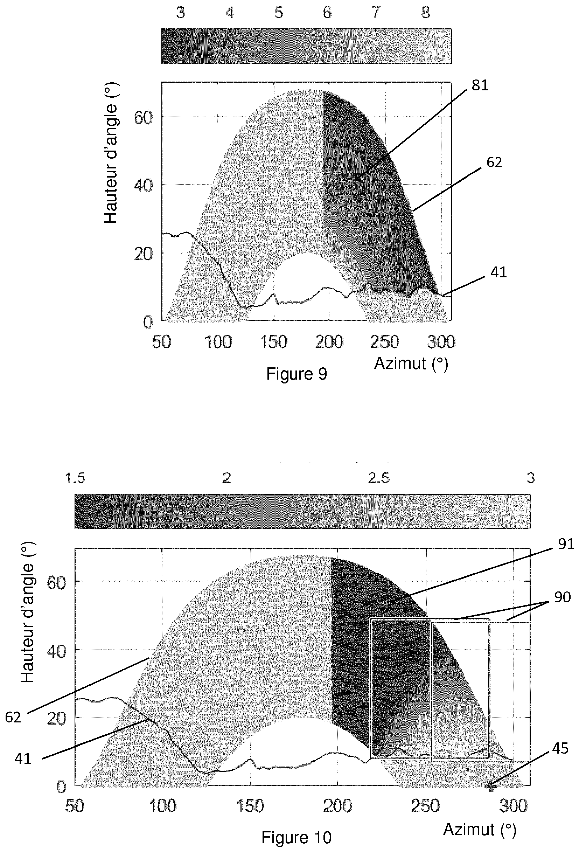

La figure 9 illustre la superposition de la représentation graphique de ce troisième critère 81, de l'enveloppe 62 contenant les différentes courses apparentes du soleil au niveau de l'emplacement prédéterminé et du masque d'ombrage 41 en fonction de l'azimut et de la hauteur d'angle du soleil. Sur cette figure, il apparait clairement que les journées d'hiver, ont un poids plus pondéré que les journées d'été.

Suivant un mode de mise en oeuvre, l'estimation des trois indicateurs précédemment cités peut être limitée à une plage angulaire, en azimut et en hauteur angulaire, correspondant au champ du module photovoltaïque et centrée sur les coordonnées de l'emplacement prédéterminé.

Suivant un mode de mise en oeuvre préféré, l'estimation des trois indicateurs précédemment cités peut être limitée à une plage angulaire (azimut, hauteur angulaire) centrée sur les coordonnées de l'orientation et/ou de l'inclinaison prédéterminées et correspondant à l'intersection du champ du module photovoltaïque avec l'enveloppe contenant les différentes courses apparentes du soleil au niveau de l'emplacement prédéterminé.

De façon avantageuse, ces deux derniers modes de mise en oeuvre permettent de limiter le volume de calcul à effectuer et donc réduire le temps de calcul de la sous-étape d'optimisation de la valeur de l'angle de prise de vue.

Une optimisation du produit de ces trois critères est ensuite réalisée au cours d'une sous étape Etp44. Dans un premier temps, pour chaque point de la plage de valeurs sur laquelle ont été estimés les trois critères, le module de calcul 118 estime le produit des valeurs des trois critères précédemment estimés. Le résultat obtenu est représenté en fonction de l'azimut et de la hauteur d'angle du soleil sur la figure 10 en superposition avec les représentations graphiques du masque d'ombrage 41 et de l'enveloppe 62 contenant les différentes courses apparentes du soleil au niveau de l'emplacement prédéterminé.

Dans un deuxième temps le module de calcul 118 recherche la valeur de l'angle de prise de vue (azimut, hauteur d'élévation) optimale permettant, à l'objectif du terminal mobile, de capter la zone contenant le plus d'information pertinente. Cette zone, par la suite appelée «zone optimale» correspond à la zone pour laquelle la valeur de la somme des valeurs des produits des trois critères est maximale. Le but est de savoir si dans cette zone optimale figurent des éléments susceptibles de masquer au moins une partie du rayonnement solaire incident sur le module photovoltaïque. Si cette zone optimale ne contient aucun élément susceptible de masquer le rayonnement solaire, l'énergie captée par un module photovoltaïque 131 placé au niveau de l'emplacement prédéterminé est maximale. Si cette zone optimale contient des éléments susceptibles de masquer au moins une partie du rayonnement solaire, c'est dans cette zone que l'impact de ces éléments est maximum.

Les valeurs optimales de l'angle azimutal et de la hauteur d'angle sont obtenues de façon itérative. Pour cela on considère une zone angulaire (azimut, hauteur d'élévation) égale à l'angle de champ de l'objectif du terminal mobile avec laquelle le module de calcul balaye le produit des valeurs des trois critères. Cette zone angulaire est représentée, sur la figure 10, par un cadre 90. Les coordonnés du centre de ce cadre 90 correspondent aux coordonnées de l'emplacement sur lequel est posé le terminal mobile. Soient A et H les valeurs respectives de l'azimut et de la hauteur angulaire du centre du cadre 90 et αₐ et αₕ les valeurs respectives de l'angle de champ en azimut et en hauteur d'angle de l'objectif du terminal mobile. Dans ces conditions, l'ensemble des points situés à l'intérieur de ce cadre ont un angle azimutal compris entre A-αₐ/2 et A+αₐ/2 et une hauteur d'angle comprise entre H-αₕ/2 et H+αₕ/2.

Suivant un mode de mise en oeuvre, afin de trouver la valeur de l'angle de prise de vue optimale, le module de calcul peut initialiser la valeur des coordonnées du centre du cadre 90 correspondant à la zone angulaire captée par l'objectif et le capteur du terminal mobile 11 à une valeur prédéterminée. Le module de calcul estime ensuite la somme des valeurs du produit obtenu pour chacun des points présents à l'intérieur du cadre 90 et stocke la valeur de la somme des produits dans une mémoire.

La valeur des coordonnées du centre du cadre 90 est ensuite incrémentée d'une valeur d'incrément prédéterminée, par exemple 1° suivant l'axe des azimuts et/ou suivant celui de la hauteur d'angle.

Avec cette nouvelle position du cadre, le module de calcul estime la valeur de la somme des valeurs du produit obtenu pour chacun des points présents à l'intérieur du cadre. Cela revient à sommer la valeur du produit obtenu pour chaque point dont l'azimut est compris entre A-αₐ/2 et A+αₐ/2 et dont la hauteur d'élévation est comprise entre H-αₕ/2 et H+αₕ/2. La nouvelle valeur de la somme des produits est comparée à la valeur stockée en mémoire. Si la nouvelle valeur est strictement supérieure à la valeur stockée en mémoire, le module de calcul remplace l'ancienne valeur par la nouvelle valeur obtenue.

Le module de calcul réitère cette dernière opération tant que l'ensemble de la zone sur laquelle le produit des trois critères a été estimé n'a pas été entièrement parcourue par le cadre 90 représentant l'angle de vue de l'objectif et du capteur du terminal mobile.

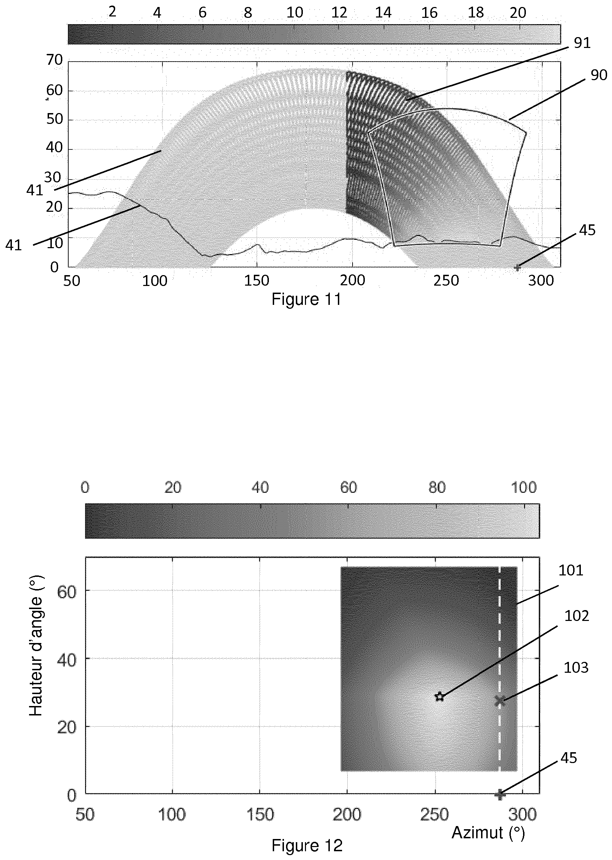

La sous-étape d'optimisation a été décrite à l'aide de figures représentant un cadre 42, 43, 90 de forme rectangulaire. Cette description n'est nullement limitative et le cadre peut avoir une forme quelconque comme une portion de disque tronquée. A titre illustratif, la figure 11 représente les mêmes courbes que celles représentées sur la figure 10 avec un cadre correspondant à la zone angulaire captée par l'objectif et le capteur du terminal mobile 11 ayant la forme d'une portion de disque tronquée afin de prendre en compte la conversion des coordonnées cartésiennes en coordonnées sphériques.

Suivant un mode de mise en oeuvre, afin de limiter le volume de calcul, le balayage du cadre en azimut et/ou en hauteur d'élévation peut être effectué avec un incrément d'une valeur supérieure à 1°, par exemple une valeur comprise entre 2° et 10°. De même, les incréments suivant l'axe azimutal et suivant l'axe correspondant à la hauteur d'angle peuvent être de même valeur ou de valeurs différentes.

Suivant un autre mode de mise en oeuvre, la méthode d'optimisation de la valeur de l'angle de prise de vue précédemment décrite peut prendre une forme dégradée. Dans ce mode dégradé, la recherche de la valeur de l'angle de prise de vue optimale n'est effectuée que suivant un seul des deux axes, à savoir celui correspondant à la hauteur d'angle. Lors de cette optimisation, la valeur de l'azimut du centre du cadre correspondant la zone angulaire captée par l'objectif du terminal mobile 11 est gardée constante et égale à la valeur de l'azimut de la position prédéterminée. De façon avantageuse, ce mode de mise en oeuvre dégradé permet de minimiser le volume de calcul à effectuer et donc réduire le temps d'optimisation de la valeur de l'angle de prise de vue.

Comme décrit dans le mode de mise en oeuvre non dégradé, le module de calcul estime les trois indicateurs précédemment décrits et effectue le produit de ces trois indicateurs pour chaque angle d'incidence. Afin de réduire le volume de calcul, les estimations des trois indicateurs suivant l'axe des azimuts, peuvent être limitées à une plage de valeur correspondant à l'angle de champ en azimut de l'objectif du terminal mobile.

Comme précédemment, le module de calcul considère une zone angulaire de balayage égale à l'angle de champ de l'objectif du terminal mobile. Le module de calcul initialise la valeur de l'azimut du centre de cette zone angulaire à la valeur de l'azimut de l'emplacement prédéterminé et effectue un balayage des valeurs du produit des trois critères suivant l'axe correspondant à la hauteur angulaire. Pour chaque valeur de hauteur d'angle, le module de calcul estime la somme des produits obtenus pour chacun des points présents à l'intérieur de la zone angulaire de balayage et recherche la valeur de la hauteur d'angle permettant de maximiser cette somme.

La figure 12 illustre un exemple de résultats obtenus en appliquant les deux modes de mise en oeuvre de la sous-étape d'optimisation de la valeur de l'angle de prise de vue, tels que décrits précédemment. Cette figure est une représentation graphique de la somme des produits des trois critères en fonction de la position du soleil (azimut et hauteur d'angle) dans le ciel. Elle présente la zone optimale 101 et l'angle de prise de vue optimal 102, 103, l'objectif du terminal mobile devant être centré en azimut et en élévation sur les coordonnées de cet angle de vue optimal. La référence 102 correspond l'angle de prise de vue optimal lorsque l'optimisation est réalisée suivant l'azimut et la hauteur d'angle. La référence 103 correspond l'angle de prise de vue optimal dans un mode dégradé, lorsque l'optimisation est réalisée suivant seulement la hauteur d'angle, l'azimut étant égal à celui de la position prédéterminée.

Une fois la prise de vue depuis l'emplacement prédéterminé effectuée, un module de traitement d'image 117 du terminal mobile peut parcourir l'image, par exemple, à l'aide d'un algorithme de détection de forme stocké dans la mémoire 119 du terminal mobile 11, afin de détecter automatiquement l'ensemble des éléments susceptibles de masquer totalement ou partiellement le rayonnement solaire sur l'emplacement prédéterminé à au moins un moment de la journée et/ou de l'année et délimiter le masque d'ombrage. L'algorithme peut également détecter automatiquement la ligne de ciel, c'est-à-dire la ligne de séparation entre le ciel et le sol, sur la photographie. L'algorithme calcule automatiquement les azimuts et les hauteurs angulaires du contour de chaque élément faisant obstacle au rayonnement solaire sur l'emplacement prédéterminé. A titre illustratif, l'algorithme peut utiliser des métadonnées de la photographie, comme l'angle de champ de vision, c'est-à-dire l'ouverture entre les limites latérales du champ de vision, la longueur de focale de l'objectif ou la taille du capteur d'image, pour effectuer les calculs d'azimut et de hauteur angulaire.

Suivant une variante de mise en oeuvre, le masque d'ombrage peut être défini de façon manuelle par l'utilisateur. L'utilisateur peut, par exemple, délimiter sur la photographie, le contour des éléments susceptibles de venir porter une ombre sur le panneau photovoltaïque. Il peut, par exemple, délimiter le contour du masque sur la photographie à l'aide de son doigt, un stylet ou tout autre outil équivalent. Il peut tracer la ligne d'horizon ou déplacer l'image d'une ligne représentative d'une ligne d'horizon dans le cas d'un terrain plat ou peu accidenté, afin qu'elle coïncide avec la ligne d'horizon de la vue photographiée.

Suivant une autre variante de mise en oeuvre, l'utilisateur peut déplacer une ou plusieurs formes géométriques sur un écran du terminal mobile 11, par exemple, un ou plusieurs carrés ou rectangles, une ou plusieurs lignes, afin d'entourer le ou les éléments susceptibles de masquer totalement ou partiellement le rayonnement solaire sur l'emplacement prédéterminé et ainsi définir le masque d'ombrage de façon grossière.

Suivant une autre variante de mise en oeuvre, l'utilisateur peut déplacer, agrandir ou rétrécir une forme géométrique comme un carré, un rectangle, sur l'écran du terminal mobile 11, afin que cette forme couvre de manière approximative la partie du ciel principale ne contenant pas d'éléments susceptibles de masquer totalement ou partiellement le rayonnement solaire sur l'emplacement prédéterminé.

Suivant une autre variante de mise en oeuvre, le terminal mobile affiche une mire fixe et l'utilisateur déplace sur 180° autour de l'emplacement prédéterminé le terminal mobile en faisant suivre la mire sur le contour des obstacles. Au fur et à mesure du déplacement, le terminal mobile 11 détermine l'inclinaison et l'azimut de chaque point et les stocke dans la mémoire 119, afin de former le masque d'ombrage.

Une fois le masque d'ombrage défini, ce dernier peut être enregistré dans la mémoire 119 du terminal mobile 11.

Une fois la position de l'emplacement prédéterminé et un masque d'ombrage définis, une étude d'impact du masque d'ombrage sur l'ensoleillement de l'emplacement prédéterminé est menée. A cet effet, un module de calcul 118 du terminal mobile 11 peut prendre en compte les données de position estimées ainsi que le masque d'ombrage pour estimer, au cours d'une étape Etp5, l'évolution de l'amplitude du rayonnement solaire reçu, au cours d'une année, par un module photovoltaïque positionné à l'emplacement prédéterminé.

Par « amplitude du rayonnement solaire », on entend la puissance reçue par le panneau photovoltaïque par unité d'aire exprimée en W.m⁻².

Dans un premier temps, le module de calcul 118 du terminal mobile peut déterminer les apports solaires au niveau de l'emplacement prédéterminé à partir des données de position de ce dernier. A cet effet, l'étape Etp4 peut comprendre une sous-étape d'estimation de données moyennes d'ensoleillement au niveau de l'emplacement prédéterminé.

Suivant un mode de mise en oeuvre, le module de communication 114 du terminal mobile 11 peut interroger, via un protocole de communication, un service web 122 avec les données de position (emplacement, orientation, éventuellement inclinaison) de l'emplacement prédéterminé afin d'obtenir le gisement solaire à cette position, c'est-à-dire les renseignements sur l'ensoleillement de l'emplacement prédéterminé. En retour, le module de communication 114 peut, par exemple, recevoir du service web 122 des mesures moyennes d'ensoleillement au cours d'une année, des valeurs de température moyennes au cours d'une année, des mesures moyennes d'énergie solaire reçues par l'emplacement prédéterminé sur des périodes prédéterminées de l'année. Le module de communication 114 peut, par exemple, recevoir les données d'ensoleillement de l'emplacement prédéterminé pour chaque jour de l'année et chaque heure de la journée. Ces différentes mesures météorologiques moyennes peuvent être rassemblées sous la forme d'une année météorologique typique (ou TMY pour «*Typical Meteorological Year*» selon la terminologie anglo-saxonne). Une année météorologique typique est un fichier de données climatiques relatives à une année, constituée de mois représentatifs du climat moyen de l'emplacement considéré. Ce fichier est une synthèse d'une série temporelle d'une période de plusieurs années en une seule année représentative de la période considérée. Le fichier est construit en choisissant, pour chacun des mois de l'année, le mois le plus représentatif de l'ensemble des mois correspondants, dans la période considérée.

Afin de réduire le nombre de données à traiter, la place mémoire utilisée et le nombre de requêtes vers le service web 122, le module de communication 114 du terminal mobile 11 peut recevoir pour chaque mois de l'année, les données d'ensoleillement d'une journée type ou d'un jour moyen représentatif des différents jours du mois considéré. Les données d'ensoleillement de cette journée type peuvent, par exemple, être égales aux données mensuelles divisées par le nombre de jours du mois. Suivant un autre exemple, le jour moyen du mois peut correspondre au jour pour lequel la déclinaison du soleil est la plus proche de la déclinaison moyenne du mois considérés. Pour rappel, la déclinaison du soleil correspond à l'angle formé par la direction Terre-Soleil et le plan de l'équateur terrestre. Cet angle est positif au nord et négatif au sud du plan de l'équateur terrestre. Les données de cette journée type sont ensuite reproduites pour chaque jour du mois considéré.

Suivant une autre variante, les apports solaires sur l'emplacement prédéterminé peuvent être obtenus par le calcul en exploitant un modèle mathématique, par exemple, stocké dans la mémoire 119 du terminal 11.

Pour chaque jour de l'année, le modèle de rayonnement fournit une courbe théorique du rayonnement solaire en fonction du temps et en condition de temps clair. Ce modèle théorique permet d'estimer le rayonnement solaire, en temps clair, sur une zone géographique en fonction de la date, de l'heure de la longitude et de la latitude de l'emplacement prédéterminé, de l'orientation du module photovoltaïque, etc.

A l'aide de ces données théoriques, un module de calcul 118 du terminal mobile 11 peut ensuite établir un gisement solaire pour chaque jour de l'année et chaque heure du jour ou pour chaque heure de chaque journée type de chaque mois de l'année et appliquer une pondération pour prendre en compte les phénomènes météorologiques (nuages, ...).

Suivant une autre variante, le terminal mobile 11 peut contenir en mémoire des tableaux de valeurs moyennes d'ensoleillement pour des zones géographiques. A partir des différentes données moyennes d'ensoleillement de l'emplacement prédéterminé, de la course du soleil au cours de la journée, de la position du soleil au cours de l'année, un module de calcul 118 du terminal mobile peut estimer l'énergie solaire théoriquement reçue par l'emplacement prédéterminé à l'aide d'un algorithme stocké dans la mémoire 119 du terminal mobile 11.

Afin de prendre en compte l'environnement réel de l'emplacement prédéterminé au niveau duquel le module photovoltaïque est destiné à être implanter, l'étape Etp4 peut comprendre une sous-étape de superposition des données moyennes d'ensoleillement avec celles du masque d'ombrage définies précédemment. En superposant ces données, le module de calcul 118 peut ainsi estimer le rayonnement solaire moyen réellement reçu par l'emplacement prédéterminé en pondérant l'énergie solaire théoriquement reçue avec les données du masque d'ombrage. Cette pondération a pour but de prendre en compte les pertes de production d'énergie photovoltaïque dues aux différents éléments susceptibles d'intercepter la lumière arrivant sur le module photovoltaïque et d'y projeter une ombre. Ce rayonnement solaire moyen réellement reçu par l'emplacement prédéterminé peut être calculé pour chaque jour de l'année avec une granularité horaire, etc. Pour rappel, la granularité correspond au plus petit élément de détail géré par le module de calcul.

Le procédé comporte ensuite une étape Etp6 de calcul d'un bilan énergétique. Ce calcul est réalisé à partir de l'évolution de l'amplitude du rayonnement solaire reçu à l'emplacement prédéterminé, des besoins énergétiques du dispositif électriquement autonome 13 sélectionné et des caractéristiques techniques de ce dernier.

A partir de l'évolution de l'amplitude du rayonnement solaire reçu au niveau de l'emplacement prédéterminé un module de calcul 118 du terminal mobile peut calculer une estimation de l'évolution de l'énergie électrique générée, au cours d'une année, par le module photovoltaïque 131 associé au dispositif d'occultation 130 installé au niveau de cet emplacement prédéterminé en fonction des caractéristiques techniques du module photovoltaïque 131 du dispositif domotique électriquement autonome 13 sélectionné.

Durant cette étape Etp6, le module de calcul 118 du terminal mobile estime l'énergie électrique totale produite par le module photovoltaïque 131 sur des périodes régulières de l'année. Le calcul est effectué à partir du rayonnement solaire moyen réellement reçu par le module photovoltaïque 131 au niveau de l'emplacement prédéterminé. Pour cela, le module de calcul 118 prend en compte les données du masque d'ombrage et les caractéristiques techniques du module photovoltaïque 131 comme sa puissance nominale, sa surface, son rendement, etc. De façon préférentielle, le module de calcul 118 estime l'énergie électrique produite par le module photovoltaïque 131 au cours de chaque jour de l'année et idéalement pour chaque heure de la journée.

Suivant un mode de mise en oeuvre, le module de calcul 118 peut également prendre en compte la température pour établir le bilan énergétique. En effet, les caractéristiques techniques du module photovoltaïque sont généralement données pour une valeur de température prédéterminée. Généralement cette température est égale à 25°C. Lorsque les températures d'utilisation du module photovoltaïque 131 sont inférieures à cette température prédéterminée le rendement du module photovoltaïque est augmenté. A l'inverse, lorsque les températures d'utilisation du module photovoltaïque sont supérieures à cette température prédéterminée, le rendement est diminué. Afin de tenir compte de la température au niveau de l'emplacement prédéterminé et ainsi corriger les valeurs d'énergie électrique calculées, le module de communication 114 du terminal mobile peut interroger un service web 122 afin d'obtenir les températures moyennes de chaque jour de l'année ou celle de chaque journée type de chaque mois de l'année. Idéalement, ces températures sont données pour chaque heure de la journée. La correction des valeurs d'énergie produite peut être effectuée en appliquant aux résultats un coefficient de correction dépendant de l'écart de température entre la température d'utilisation et la valeur de température prédéterminée. Ce coefficient de correction peut, par exemple, faire partie des caractéristiques techniques associées au dispositif domotique électriquement autonome 13 sélectionné lues après sa sélection au cours de l'étape Etp1.

L'estimation de l'énergie électrique produite par le module photovoltaïque, par exemple, au cours d'une journée, est ensuite pondérée par le rendement de charge de l'élément de stockage d'énergie électrique 132 du dispositif domotique électriquement autonome 13 sélectionné. Ce rendement de charge dépend, notamment, de la température d'utilisation, du niveau de charge de l'élément de stockage d'énergie électrique et du niveau de courant injecté pour les charger. Cette estimation pondérée permet de déterminer la charge potentielle de l'élément de stockage d'énergie électrique pour chaque période régulière prédéterminée de l'année. De façon préférentielle, l'estimation est réalisée pour chaque jour de l'année et idéalement pour chaque heure de la journée.

Afin établir le bilan énergétique, par exemple journalier, le module de calcul 118 du terminal mobile 11 peut également prendre en compte l'autodécharge de l'élément de stockage d'énergie électrique 132 sur une journée. Cette autodécharge dépend de divers paramètres, comme la température et la charge des éléments de stockage d'énergie électrique. Par exemple, à basse température, l'autodécharge est moins importante qu'à haute température. De même, l'élément de stockage d'énergie électrique 132 se décharge plus rapidement lorsqu'il est à pleine capacité que lorsqu'il est partiellement chargé. Pour le calcul du bilan énergétique, l'autodécharge de l'élément de stockage d'énergie électrique peut être modélisée par une consommation parasite dépendant, notamment, de la température d'utilisation du dispositif domotique électriquement autonome 13 et du niveau de charge de l'élément de stockage d'énergie électrique 132.

Au cours du bilan énergétique, le module de calcul 118 compare la charge de l'élément de stockage d'énergie 132, son autodécharge et la consommation du dispositif d'occultation 130, afin d'estimer un indice de confiance au cours d'une étape Etp7. La consommation du dispositif d'occultation 130 dépend notamment de la consommation du dispositif d'entrainement motorisé mettant en mouvement l'écran. L'indice de confiance correspond à une donnée représentative de la compatibilité entre les besoins énergétiques du dispositif d'occultation 130 et l'emplacement prédéterminé destiné à recevoir le module photovoltaïque 131 associé à ce dispositif d'occultation 130. Il a pour but d'informer l'utilisateur si le dispositif domotique électriquement autonome 13 sélectionné peut fonctionner correctement tout au long de l'année soit en installant son module photovoltaïque 131 sur l'emplacement prédéterminé soit en installant le dispositif domotique électriquement autonome de sorte que la position du module photovoltaïque corresponde avec celle de l'emplacement prédéterminé. L'indice de confiance peut être établi en considérant un ou plusieurs éléments et/ou en combinant leurs résultats.

Suivant un premier mode de mise en oeuvre, afin de définir l'indice de confiance, le module de calcul 118 du terminal mobile 11 peut calculer l'utilisation maximale quotidienne garantie du dispositif d'occultation sur une année. Le module de calcul 118 peut calculer le nombre de cycle de fonctionnement maximal que peut effectuer le dispositif d'occultation 130, chaque jour de l'année, sans que la valeur de la charge du ou des éléments de stockage d'énergie électrique 132 ne passe en dessous d'une valeur seuil prédéterminée. Cette utilisation maximale peut, par exemple, être calculée en utilisant une méthode itérative. Dans un premier temps, le module de calcul 118 considère une utilisation du dispositif d'occultation 130 constituée d'un cycle de fonctionnement par jour. En prenant en compte les caractéristiques techniques du dispositif d'occultation, et notamment celles de son dispositif d'entrainement motorisé, le module de calcul 118 peut calculer la consommation du dispositif d'occultation pour effectuer ce nombre de cycles de fonctionnement.

Le module de calcul 118 du terminal mobile peut ensuite, pour chaque jour de l'année, calculer la valeur de la charge restante dans l'élément de stockage d'énergie électrique 132 associé au dispositif d'occultation après ce nombre de cycles de fonctionnement. Pour cela, le module de calcul 118 du terminal mobile 11 peut considérer la consommation du dispositif d'occultation 130, le courant fourni par le module photovoltaïque 131 et donc la charge de l'élément de stockage d'énergie électrique 132 ainsi que l'autodécharge de ce dernier. Si cette valeur de charge restante est supérieure à une valeur seuil prédéterminée, le module de calcul 118 incrémente le nombre de cycles de fonctionnement et recommence les calculs pour ce nouveau nombre de cycles. A titre illustratif et nullement limitatif, la valeur seuil, également appelée limite de profondeur d'état de charge, peut être fixée à une valeur comprise entre 0% et 30% de la charge maximale du ou des éléments de stockage d'énergie électrique 132 du dispositif électriquement autonome 13. De façon préférentielle, la valeur seuil peut être fixée à une valeur comprise entre 10% et 20% de la charge maximale de l'élément de stockage d'énergie électrique 132 associé au dispositif d'occultation 130. Si au cours du calcul, le module de calcul 118 trouve une valeur de charge restante inférieure à la valeur seuil, le module de calcul stoppe les calculs et considère ce nombre de cycles comme impossible à effectuer et retient la valeur précédente comme nombre de cycles de fonctionnement quotidien maximum possible. Afin d'établir le nombre de cycles de fonctionnement possible, le module de calcul 118 peut effectuer le calcul pour chaque jour de l'année. Suivant un autre mode de mise en oeuvre, le module de calcul peut ne considérer qu'une journée type par mois, par exemple, pour réduire le volume de calcul.

Un autre élément pouvant être pris en compte pour définir l'indice de confiance est le nombre de cycles de fonctionnement successifs que peut effectuer le dispositif d'occultation 130 avant que la valeur de la charge de l'élément de stockage d'énergie électrique 132 qui lui est associé soit inférieure à une valeur critique prédéfinie. Pour cela, le module de calcul 118 choisit le pire jour de l'année, c'est-à-dire le jour de l'année pour lequel la valeur de la charge de l'élément de stockage d'énergie électrique est la plus faible. Lorsque le module de calcul 118 utilise une journée type pour chaque mois de l'année, il sélectionne le jour type pour lequel la valeur de la charge des éléments de stockage d'énergie électrique est la plus faible. A partir de la valeur de charge pour le jour sélectionné, le module de calcul 118 estime le nombre de cycles successifs que peut effectuer le dispositif d'occultation 130 avant que la valeur de la charge de l'élément de stockage d'énergie électrique 132 soit inférieure à la valeur critique.

Suivant une variante, le module de calcul peut estimer le nombre de scénarios d'utilisation journalière typique que peut effectuer le dispositif domotique électriquement autonome 13, sans apport solaire, c'est-à-dire sans nouvel apport d'énergie solaire de la part de son module photovoltaïque, par exemple, suite à une défaillance de ce dernier ou du fait de conditions climatiques extrêmes du point de vue de la luminosité. Suivant le dispositif d'occultation 130, le scénario d'utilisation journalier typique peut être défini de façon différente. A titre illustratif, dans le cas d'un volet roulant, d'un volet battant, on peut définir un scénario journalier par un cycle de fonctionnement, c'est-à-dire une ouverture et une fermeture. Dans le cas d'un portail motorisé, on peut, par exemple, considérer deux cycles de fonctionnement par jour. Comme pour le cas précédent, le module de calcul considère la valeur de la charge de l'élément de stockage d'énergie électrique pour le jour de l'année le plus défavorable. Il estime l'énergie consommée par le dispositif d'occultation au cours d'une journée type et, à partir du résultat obtenu, calcule le nombre de journées type que peut effectuer le dispositif d'occultation 130 avant que la valeur de la charge de l'élément de stockage d'énergie 132 qui lui est associé soit inférieure à la valeur critique.

Suivant un mode de mise en oeuvre, afin de réduire le volume de calcul, le module de calcul 118 peut effectuer une balance énergétique sur une année complète. A cet effet, l'étape Etp6 de calcul du bilan énergétique peut comprendre une sous-étape de calcul d'une balance énergétique sur une année complète. Avant d'effectuer les calculs pour chaque jour de l'année ou chaque journée type de l'année, le module de calcul 118 peut estimer la somme de toutes les énergies accumulées au cours d'une année ainsi que la somme de toutes les consommations (consommation actionneur, autodécharge, ...) au cours d'une année complète. Si la somme des consommations est supérieure à la somme des apports énergétiques sur la même période, on peut considérer que le système ne peut pas fonctionner sans avoir à effectuer les calculs complets.

Suivant un mode de mise en oeuvre, le procédé de test peut comprendre une étape Etp8 d'affichage d'informations complémentaires liées au test de compatibilité.

A titre illustratif, lorsque le test de compatibilité est positif, le module d'affichage 116 du terminal mobile 11 peut afficher sur un écran de ce dernier une liste de contacts professionnels susceptibles de vendre et/ou installer le dispositif domotique électriquement autonome 13 sélectionné proche géographiquement du lieu où sera installé ce dispositif domotique électriquement autonome 13. Pour cela, le module de communication 114 du terminal mobile peut interroger, via un protocole de communication, une base de données comprenant la liste des revendeurs et/ou des installateurs agréés dont la distance par rapport à l'emplacement prédéterminé est inférieure à une valeur prédéterminée. La base de données contenant la liste des professionnels agréés peut être située dans la mémoire 121 d'un serveur distant 12, 12' ou la mémoire 119 du terminal mobile 11. De façon avantageuse, cette deuxième alternative permet de consulter cette liste même en cas de connectivité défectueuse.

Suivant une variante de mise en oeuvre, lorsque le test de compatibilité est négatif, le module d'affichage116 peut déclencher, sur un écran du terminal mobile 11, l'affichage d'un message proposant à l'utilisateur d'effectuer un nouveau test. Le message peut proposer d'effectuer un nouveau test en utilisant, par exemple, une ou plusieurs autres références de module photovoltaïque 131 plus puissant et/ou au moins une autre référence d'élément de stockage d'énergie électrique 132 ayant une capacité plus importante et/ou une autre matière d'écran permettant, par exemple, de choisir un autre type d'actionneur consommant moins d'énergie, etc.

Suivant un autre exemple, les informations complémentaires peuvent comprendre un récapitulatif de la configuration du dispositif domotique électriquement autonome 13 testé et des résultats du test comme le nombre de cycles quotidien maximum exécutables, le nombre de cycles successifs exécutables et/ou le nombre de scénarios typique journalier effectuable sans apport énergétique supplémentaire. Ces différents renseignements pourront, par exemple, être présentés au professionnel qui vend et/ou installe le dispositif domotique électriquement autonome sélectionné.

Lorsqu'au cours de l'étape Etp1 de sélection du dispositif domotique électriquement autonome 13, un paramètre n'a pas été renseigné, par exemple la matière de l'écran, et/ou l'orientation et/ou l'inclinaison, ce paramètre, par exemple cette matière ou une liste de matières possibles, et/ou une orientation et/ou une inclinaison peut être proposée en fonction des résultats obtenus lors du test.

Les étapes Etp1, Etp2 et Etp4 peuvent être mise en oeuvre dans n'importe quel ordre chronologique.

Les étapes Etp2 et Etp4 peuvent être mises en oeuvre simultanément lorsque, par exemple l'utilisateur effectue, sur le terminal mobile, une action, notamment une action de déclenchement, par exemple par appui sur un bouton. Cette action peut en effet déclencher simultanément :
- l'acquisition d'une photographie ou d'un film ; et
- l'acquisition de données de position, notamment longitude et/ou latitude et/ou azimut et/ou hauteur angulaire.

L'invention a également pour objet un procédé d'installation d'un dispositif domotique électriquement autonome.

Le procédé d'installation comprend une première étape de mise en oeuvre du procédé de test de compatibilité entre les besoins énergétiques du dispositif domotique électriquement autonome 13 et un emplacement prédéterminé pour installer un module photovoltaïque 131 tel que défini précédemment.

Si le résultat du test de compatibilité est positif, le procédé d'installation comprend une étape d'installation du dispositif de fermeture, d'occultation, de protection solaire ou d'écran 130. Le procédé comprend également une étape d'installation du module photovoltaïque 131 sur l'emplacement prédéterminé. Le procédé peut comprendre une étape d'installation de l'élément de stockage d'énergie électrique 132.

L'invention a été décrite en application avec un dispositif domotique électriquement autonome comprenant un dispositif 130 de fermeture, d'occultation, de protection solaire ou d'écran, cette description n'est nullement limitative. L'invention peut également être appliquée à d'autres dispositifs électriquement autonome comme des capteurs domotiques, des équipements d'alarme, des petites alimentations universelles solaires, des systèmes d'éclairage, de balisage et/ou de signalisation, par exemple, routière, etc.

L'invention porte aussi sur un dispositif de test de compatibilité, notamment un terminal mobile de test de compatibilité, un terminal fixe de test de compatibilité ou un serveur de test de compatibilité, comprenant les éléments matériels et logiciels mettant en oeuvre le procédé défini précédemment.

La présente invention a été décrite à travers une mise en oeuvre à l'aide d'un terminal mobile 11, cette description n'est nullement limitative. Le procédé décrit précédemment peut également être mis en oeuvre de la même manière, à l'aide d'un terminal fixe, comme un ordinateur de bureau. Ce terminal fixe peut comprendre un moyen de communication intégré ou non, afin, par exemple, de pouvoir consulter une ou plusieurs bases de données situées sur un ou plusieurs serveurs distants 12, 12'. Afin de renseigner les données de position de l'emplacement prédéterminé, l'utilisateur doit entrer les données de position de façon manuelle. De même, pour définir le masque d'ombrage, l'utilisateur doit télécharger une image prise au niveau de l'emplacement prédéterminé, éventuellement, en respectant un certain angle de champ de vision. Les différentes données, comme les données de position, l'image destinée à définir le masque d'ombrage, sont enregistrées dans une mémoire du terminal fixe. Dans cette configuration, le programme mettant en oeuvre le procédé de test peut être téléchargé, par exemple via internet, sur l'ordinateur, ou peut être situé sur un support de données de type magnétique ou à mémoire.

Suivant un autre mode de mise en oeuvre, l'utilisateur peut se connecter, à l'aide de son terminal fixe ou mobile, sur un serveur distant 12, 12' comprenant au moins une mémoire 121 sur laquelle est enregistré le programme informatique mettant en oeuvre le procédé de test.

Un autre objet de la présente invention est un produit de programme informatique comprenant des instructions lisibles par un ordinateur ou tout type de dispositif informatique équivalent, comme un terminal fixe ou mobile, qui, lorsqu'elles sont exécutées sur un processeur, amènent le processeur à exécuter le procédé de test de compatibilité, tel que décrit précédemment. Suivant un mode de réalisation, le produit de programme informatique, également nommé programme ordinateur est téléchargeable depuis un réseau de communication et/ou enregistré sur un support de données lisible par un ordinateur et exécutable par un ordinateur.

## Revendications

1. Procédé de test de compatibilité entre les besoins énergétiques d'un dispositif domotique électriquement autonome (13) et un emplacement prédéterminé pour installer un module photovoltaïque (131), le dispositif domotique électriquement autonome (13) comprenant le module photovoltaïque, un dispositif de fermeture, d'occultation, de protection solaire ou d'écran (130) et un élément de stockage d'énergie électrique (132) configuré pour alimenter le dispositif de fermeture, d'occultation, de protection solaire ou d'écran (130), l'élément de stockage d'énergie électrique (132) étant connecté au module photovoltaïque (131) et destiné à être chargé à partir de l'énergie électrique générée par le module photovoltaïque (131), le procédé étant **caractérisé en ce qu'**il comprend au moins :
- Une étape (Etp1) de sélection du dispositif domotique électriquement autonome (13) et d'enregistrement, dans une mémoire, d'une donnée identifiant le dispositif domotique électriquement autonome (13),
- Une étape (Etp2) de renseignement, par acquisition ou par saisie, et d'enregistrement, dans une mémoire, de données de position relatives à l'emplacement prédéterminé, les données de position comprenant au moins des données de localisation et de l'orientation de l'emplacement prédéterminé,
- Une étape (Etp3) d'estimation et d'enregistrement, dans une mémoire, de données d'un diagramme solaire au niveau de l'emplacement prédéterminé,
- Une étape (Etp5) de calcul d'une estimation de l'évolution de l'amplitude du rayonnement solaire reçu à l'emplacement prédéterminé au cours d'une année en tenant compte de la position de l'emplacement prédéterminé et du masque d'ombrage,
- Une étape (Etp6) de calcul d'un bilan énergétique à partir de l'évolution de l'amplitude du rayonnement solaire reçu à l'emplacement prédéterminé et des besoins énergétiques du dispositif domotique électriquement autonome (13) sélectionné.

2. Procédé selon la revendication précédente comprenant en outre une étape (Etp4) de définition et d'enregistrement, dans une mémoire, de données d'un masque d'ombrage représentatif d'éléments susceptibles de projeter une ombre sur l'emplacement prédéterminé.

3. Procédé selon la revendication précédente dans lequel le masque d'ombrage est défini, notamment de façon automatique, à partir d'une ou plusieurs photographies prise au niveau de l'emplacement prédéterminé et/ou à partir d'un film tourné au niveau de l'emplacement prédéterminé.

4. Procédé selon une des revendications 2 et 3 dans lequel l'étape (Etp4) de définition et d'enregistrement comprend une sous-étape d'optimisation d'une valeur d'angle de prise de vue par rapport à la normale à la surface sensible du module photovoltaïque disposé à l'emplacement prédéterminé.

5. Procédé selon la revendication précédente dans lequel l'optimisation de la valeur de l'angle de prise de vue est effectuée en considérant trois critères, un premier critère dépendant de l'angle d'incidence du soleil, un deuxième critère dépendant de la réponse du module photovoltaïque et un troisième critère dépendant de la durée d'ensoleillement au niveau de la position prédéterminée.

6. Procédé selon une des revendications précédentes comprenant en outre une étape (Etp7) d'estimation d'un indice de confiance représentatif de la compatibilité entre les besoins énergétiques du dispositif domotique électriquement autonome (13) sélectionné, lors de l'étape (Etp1) de sélection et les apports énergétiques du module photovoltaïque.

7. Procédé selon la revendication précédente dans lequel l'étape d'estimation de l'indice de confiance comprend une sous-étape de calcul du nombre de cycles de fonctionnement quotidien, du dispositif domotique électriquement autonome (13) sélectionné, lors de l'étape (Etp1) de sélection, le nombre de cycles de fonctionnement quotidien étant par exemple moyenné sur une année.

8. Procédé selon la revendication précédente dans lequel le nombre de cycles de fonctionnement quotidien du dispositif domotique électriquement autonome (13) sélectionné, lors de l'étape (Etp1) de sélection, est calculé de façon itérative.

9. Procédé selon une des revendications 6 à 8 dans lequel l'estimation de l'indice de confiance comprend le calcul d'un nombre de cycles de fonctionnement successifs que peut effectuer le dispositif domotique électriquement autonome (13) lorsque la valeur de la charge de l'élément de stockage d'énergie électrique (132) est égale à une valeur seuil au cours d'une année.

10. Procédé selon une des revendications 6 à 9 dans lequel l'estimation de l'indice de confiance comprend le calcul du nombre de scénarios d'utilisation journalier typique que peut effectuer le dispositif domotique électriquement autonome (13) lorsque la valeur de la charge de l'élément de stockage d'énergie électrique (132) est égale à une valeur seuil au cours d'une année.

11. Procédé selon une des revendications précédentes dans lequel l'étape (Etp5) de calcul de l'estimation de l'évolution de l'amplitude du rayonnement solaire comprend :
- une sous-étape d'estimation de données moyennes d'ensoleillement au niveau de l'emplacement prédéterminé et,
- une sous-étape de superposition des données moyennes d'ensoleillement avec celles du masque d'ombrage.

12. Procédé selon l'une des revendications précédentes dans lequel l'étape (Etp6) de calcul du bilan énergétique comprend une sous-étape de calcul d'un bilan énergétique sur une année complète.

13. Procédé d'installation d'un dispositif domotique électriquement autonome (13), le dispositif domotique électriquement autonome (13) comprenant un module photovoltaïque (131), un dispositif de fermeture, d'occultation, de protection solaire ou d'écran (130) et un élément de stockage d'énergie électrique (132) configuré pour alimenter le dispositif de fermeture, d'occultation, de protection solaire ou d'écran (130), l'élément de stockage d'énergie électrique (132) étant connecté au module photovoltaïque (131) et destiné à être chargé à partir de l'énergie électrique générée par le module photovoltaïque (131),
le procédé étant **caractérisé en ce qu'**il comprend au moins :
- une étape de mise en oeuvre du procédé de test de compatibilité entre les besoins énergétiques du dispositif domotique électriquement autonome (13) et un emplacement prédéterminé pour installer le module photovoltaïque (131) selon une des revendications précédentes et, si le test de compatibilité est positif,
- une étape d'installation du dispositif de fermeture, d'occultation, de protection solaire ou d'écran (130), et
- une étape d'installation du module photovoltaïque (131) sur l'emplacement prédéterminé.

14. Dispositif de test de compatibilité, notamment terminal mobile de test de compatibilité, terminal fixe de test de compatibilité ou serveur de test de compatibilité, comprenant les éléments matériels et logiciels mettant en oeuvre le procédé de test de compatibilité selon une des revendications précédentes.

15. Programme d'ordinateur téléchargeable depuis un réseau de communication et/ou enregistré sur un support de données lisible par un ordinateur et et/eu exécutable par un ordinateur, caractérisé en ce en ce qu'il comprend des instructions qui, lorsque le programme est exécuté par l'ordinateur, conduisent celui-ci à mettre en oeuvre le procédé selon l'une quelconque des revendications 1 à 13.

## Patentansprüche

1. Verfahren zum Kompatibilitätstest zwischen dem Energiebedarf einer elektrisch autonomen heimtechnischen Vorrichtung (13) und einem vorbestimmten Standort für den Einbau eines Photovoltaikmoduls (131), wobei die elektrisch autonome heimtechnische Vorrichtung (13) das Photovoltaikmodul, eine Schließ-, Abdunklungs-, Sonnenschutz- oder Abschirmungsvorrichtung (130) und ein Speicherelement elektrischer Energie (132) enthält, das konfiguriert ist, die Schließ-, Abdunklungs-, Sonnenschutz- oder Abschirmungsvorrichtung (130) zu versorgen, wobei das Speicherelement elektrischer Energie (132) mit dem Photovoltaikmodul (131) verbunden und dazu bestimmt ist, ausgehend von der vom Photovoltaikmodul (131) erzeugten elektrischen Energie geladen zu werden,
wobei das Verfahren **dadurch gekennzeichnet ist, dass** es mindestens enthält:
- einen Schritt (Etp1) der Auswahl der elektrisch autonomen heimtechnischen Vorrichtung (13) und der Speicherung, in einem Speicher, eines Datenwerts, der die elektrisch autonome heimtechnische Vorrichtung (13) identifiziert,
- einen Schritt (Etp2) der Erkenntnis, durch Erfassung oder durch Eingabe, und der Speicherung in einem Speicher, von Positionsdaten bezüglich des vorbestimmten Standorts, wobei die Positionsdaten mindestens Lokalisierung- und Ausrichtungsdaten des vorbestimmten Standorts enthalten,
- einen Schritt (Etp3) der Schätzung und der Speicherung in einem Speicher von Daten eines Solardiagramms im Bereich des vorbestimmten Standorts,
- einen Schritt (Etp5) der Berechnung einer Schätzung der Entwicklung der Amplitude der am vorbestimmten Standort im Lauf eines Jahres empfangenen Sonneneinstrahlung unter Berücksichtigung der Position des vorbestimmten Standorts und der Beschattungsmaske,
- einen Schritt (Etp6) der Berechnung einer Energiebilanz ausgehend von der Entwicklung der Amplitude der am vorbestimmten Standort empfangenen Sonneneinstrahlung und vom Energiebedarf der ausgewählten elektrisch autonomen heimtechnische Vorrichtung (13).

2. Verfahren nach dem vorhergehenden Anspruch, das außerdem einen Schritt (Etp4) der Definition und Speicherung in einem Speicher von Daten einer Beschattungsmaske enthält, die für Elemente repräsentativ ist, die einen Schatten auf den vorbestimmten Standort werfen können.

3. Verfahren nach dem vorhergehenden Anspruch, wobei die Beschattungsmaske insbesondere automatisch ausgehend von einem oder mehreren Fotos, die im Bereich des vorbestimmten Standorts aufgenommen werden, und/oder ausgehend von einem Film definiert wird, der im Bereich des vorbestimmten Standorts gedreht wird.

4. Verfahren nach einem der Ansprüche 2 und 3, wobei der Schritt (Etp4) der Definition und Speicherung einen Teilschritt der Optimierung eines Aufnahmewinkelwerts bezüglich der Normalen zur empfindlichen Oberfläche des Photovoltaikmoduls enthält, das am vorbestimmten Standort angeordnet ist.

5. Verfahren nach dem vorhergehenden Anspruch, wobei die Optimierung des Werts des Aufnahmewinkels ausgeführt wird unter Beachtung von drei Kriterien, wobei ein erstes Kriterium vom Einfallwinkel der Sonne abhängt, ein zweites Kriterium von der Antwort des Photovoltaikmoduls abhängt, und ein drittes Kriterium von der Sonneneinstrahlungsdauer im Bereich der vorbestimmten Position abhängt.

6. Verfahren nach einem der vorhergehenden Ansprüche, das außerdem einen Schritt (Etp7) der Schätzung eines Vertrauensindex enthält, der für die Kompatibilität zwischen dem Energiebedarf der im Auswahlschritt (Etp1) ausgewählten elektrisch autonomen heimtechnischen Vorrichtung (13) und der Energiezufuhr des Photovoltaikmoduls repräsentativ ist.

7. Verfahren nach dem vorhergehenden Anspruch, wobei der Schritt der Schätzung des Vertrauensindex einen Teilschritt der Berechnung der Anzahl von täglichen Betriebszyklen der im Auswahlschritt (Etp1) ausgewählten elektrisch autonomen heimtechnischen Vorrichtung (13) enthält, wobei die Anzahl von täglichen Betriebszyklen zum Beispiel auf ein Jahr gemittelt wird.

8. Verfahren nach dem vorhergehenden Anspruch, wobei die Anzahl von täglichen Betriebszyklen der im Auswahlschritt (Etp1) ausgewählten elektrisch autonomen heimtechnischen Vorrichtung (13) iterativ berechnet wird.

9. Verfahren nach einem der Ansprüche 6 bis 8, wobei die Schätzung des Vertrauensindex die Berechnung einer Anzahl von aufeinanderfolgenden Betriebszyklen enthält, die die elektrisch autonome heimtechnische Vorrichtung (13) ausführen kann, wenn der Wert der Ladung des Speicherelements elektrischer Energie (132) gleich einem Schwellenwert im Laufe eines Jahres ist.

10. Verfahren nach einem der Ansprüche 6 bis 9, wobei die Schätzung des Vertrauensindex die Berechnung der Anzahl von Szenarien typischer täglicher Benutzung enthält, die die elektrisch autonome heimtechnische Vorrichtung (13) ausführen kann, wenn der Wert der Ladung des Speicherelements elektrischer Energie (132) gleich einem Schwellenwert im Laufe eines Jahres ist.

11. Verfahren nach einem der vorhergehenden Ansprüche, wobei der Schritt (Etp5) der Berechnung der Schätzung der Entwicklung der Amplitude der Sonneneinstrahlung enthält:
- einen Teilschritt der Schätzung von mittleren Sonneneinstrahluingsdaten im Bereich des vorbestimmten Standort, und
- einen Teilschritt der Überlagerung der mittleren Sonneneinstrahlungsdaten und derjenigen der Beschattungsmaske.

12. Verfahren nach einem der vorhergehenden Ansprüche, wobei der Schritt (Etp6) der Berechnung der Energiebilanz einen Teilschritt der Berechnung einer Energiebilanz über ein ganzes Jahr enthält.

13. Verfahren zum Einbau einer elektrisch autonomen heimtechnischen Vorrichtung (13), wobei die elektrisch autonome heimtechnische Vorrichtung (13) ein Photovoltaikmodul (131), eine Schließ-, Abdunklungs-, Sonnenschutz- oder Abschirmungsvorrichtung (130) und ein Speicherelement elektrischer Energie (132) enthält, das konfiguriert ist, die Schließ-, Abdunklungs-, Sonnenschutz- oder Abschirmungsvorrichtung (130) zu versorgen, wobei das Speicherelement elektrischer Energie (132) mit dem Photovoltaikmodul (131) verbunden und dazu bestimmt ist, ausgehend von der vom Photovoltaikmodul (131) erzeugten elektrischen Energie geladen zu werden,
wobei das Verfahren **dadurch gekennzeichnet ist, dass** es mindestens enthält:
- einen Schritt der Durchführung des Verfahrens zum Kompatibilitätstest zwischen dem Energiebedarf der elektrisch autonomen heimtechnischen Vorrichtung (13) und einem vorbestimmten Standort für den Einbau des Photovoltaikmoduls (131) nach einem der vorhergehenden Ansprüche, und wenn der Kompatibilitätstest positiv ist,
- einen Schritt des Einbaus der Schließ-, Abdunklungs-, Sonnenschutz- oder Abschirmungsvorrichtung (130), und
- einen Schritt des Einbaus des Photovoltaikmoduls (131) am vorbestimmten Standort.

14. Kompatibilitätstestvorrichtung, insbesondere mobiles Endgerät für den Kompatibilitätstest, ortsfestes Endgerät für den Kompatibilitätstest oder Kompatibilitätstest-Server, die die Hardware- und Software-Elemente enthält, die das Kompatibilitätstestverfahren nach einem der vorhergehenden Ansprüche durchführen.

15. Computerprogramm, das von einem Kommunikationsnetz herunterladbar und/oder auf einem Datenträger gespeichert ist, das computerlesbar und von einem Computer ausführbar ist, **dadurch gekennzeichnet, dass** es Anweisungen enthält, die, wenn das Programm vom Computer ausgeführt wird, diesen veranlassen, das Verfahren nach einem der Ansprüche 1 bis 13 durchzuführen.

## Claims

1. A method for testing compatibility between the energy requirements of an electrically stand-alone home-automation device (13) and a predefined site for installing a photovoltaic module (131), the electrically stand-alone home-automation device (13) comprising the photovoltaic module, a device (130) that closes, occults, protects from the sun or screens and an element (132) for storing electrical energy that is configured to supply the device (130) that closes, occults, protects from the sun or screens with power, the element (132) for storing electrical energy being connected to the photovoltaic module (131) and intended to be charged by the electrical energy generated by the photovoltaic module (131),
the method being **characterized in that** it comprises at least:
- A step (Etp1) of selecting the electrically stand-alone home-automation device (13) and storing, in a memory, data identifying the electrically stand-alone home-automation device (13),
- A step (Etp2) of obtaining, via acquisition or via input, and storing, in a memory, position data relating to the predefined site, the position data comprising at least data on the location and on the orientation of the predefined site,
- A step (Etp3) of estimating and storing, in a memory, data of a sun chart at the predefined site,
- A step (Etp5) of computing an estimation of the variation in the amplitude of the solar radiation received at the predefined site over a year while taking into account the position of the predefined site and the shadow mask,
- A step (Etp6) of computing an energy balance on the basis of the variation in the amplitude of the solar radiation received at the predefined site and of the energy requirements of the selected electrically stand-alone home-automation device (13).

2. The method as claimed in the preceding claim, furthermore comprising a step (Etp4) of defining and storing, in a memory, data of a shadow mask representative of elements likely to project a shadow onto the predefined site.

3. The method as claimed in the preceding claim, wherein the shadow mask is defined, especially automatically, on the basis of one or more photographs taken at the predefined site and/or on the basis of a film recorded at the predefined site.

4. The method as claimed in either of Claims 2 and 3, wherein the defining and storing step (Etp4) comprises a substep of optimizing a value of an image-capture angle with respect to the normal to the sensitive surface of the photovoltaic module placed at the predefined site.

5. The method as claimed in the preceding claim, wherein the value of the image-capture angle is optimized by considering three criteria, a first criterion dependent on the angle of incidence of the sun, a second criterion dependent on the response of the photovoltaic module and a third criterion dependent on the duration of insolation at the predefined position.

6. The method as claimed in one of the preceding claims, furthermore comprising a step (Etp7) of estimating a confidence index representative of the compatibility between the energy requirements of the electrically stand-alone home-automation device (13) selected in the selecting step (Etp1) and the energy delivered by the photovoltaic module.

7. The method as claimed in the preceding claim, wherein the step of estimating the confidence index comprises a substep of computing the daily number of operating cycles of the electrically stand-alone home-automation device (13) selected in the selecting step (Etp1), the daily number of operating cycles for example being averaged over a year.

8. The method as claimed in the preceding claim, wherein the daily number of operating cycles of the electrically stand-alone home-automation device (13) selected in the selecting step (Etp1) is computed iteratively.

9. The method as claimed in one of claims 6 to 8, wherein the estimation of the confidence index comprises computing a number of successive operating cycles that may be carried out by the electrically stand-alone home-automation device (13) when the value of the charge of the element (132) for storing electrical energy is equal to a yearly threshold value.

10. The method as claimed in one of claims 6 to 9, wherein the estimation of the confidence index comprises computing the number of typical daily use scenarios that the electrically stand-alone home-automation device (13) is able to handle when the value of the charge of the element (132) for storing electrical energy is equal to a yearly threshold value.

11. The method as claimed in one of the preceding claims, wherein the step (Etp5) of computing the estimation of the variation in the amplitude of the solar radiation comprises:
- a substep of estimating average insolation data at the predefined site and
- a substep of superposing the average insolation data with those of the shadow mask.

12. The method as claimed in one of the preceding claims, wherein the step (Etp6) of computing the energy balance comprises a substep of computing an energy balance over a complete year.

13. A method for installing an electrically stand-alone home-automation device (13), the electrically stand-alone home-automation device (13) comprising a photovoltaic module (131), a device (130) that closes, occults, protects from the sun or screens and an element (132) for storing electrical energy that is configured to supply the device (130) that closes, occults, protects from the sun or screens with power, the element (132) for storing electrical energy being connected to the photovoltaic module (131) and intended to be charged by the electrical energy generated by the photovoltaic module (131),
the method being **characterized in that** it comprises at least:
- a step of implementing the method for testing compatibility between the energy requirements of the electrically stand-alone home-automation device (13) and a predefined site for installing the photovoltaic module (131) as claimed in one of the preceding claims and, if the compatibility test is positive,
- a step of installing the device (130) that closes, occults, protects from the sun or screens, and
- a step of installing the photovoltaic module (131) on the predefined site.

14. A device for testing compatibility, especially a mobile terminal for testing compatibility, a fixed terminal for testing compatibility or a server for testing compatibility, comprising the hardware and software elements that implement the method for testing compatibility as claimed in one of the preceding claims.

15. A computer program that is downloadable from a communication network and/or stored on a computer-readable data medium and executable by a computer, **characterized in that** it contains instructions that, when the program is executed by the computer, cause the latter to implement the method as claimed in any one of claims 1 to 13.
